# EUROPÄISCHE PATENTSCHRIFT

(11) **EP 1 390 644 B1**
(45) Veröffentlichungstag und Bekanntmachung des Hinweises auf die Patenterteilung: **17.08.2005**
(21) Anmeldenummer: 02738086.4
(22) Anmeldetag: 17.05.2002
(51) Int. Cl.: F16H 25/12, F16H 13/06

(54) **REIBRAD-UMLAUFGETRIEBE ZUR UMFORMUNG EINER DREHENDEN IN EINE HIN- UND HERGEHENDE BEWEGUNG MIT HERABGESETZTER FREQUENZ**
FRICTION-WHEEL PLANETARY GEAR FOR CONVERTING A ROTATING MOVEMENT INTO A BACK AND FORTH MOVEMENT WITH DECREASED FREQUENCY
ENGRENAGE PLANETAIRE A ROUE DE FRICTION SERVANT A CONVERTIR UN MOUVEMENT ROTATIF EN UN MOUVEMENT DE VA-ET-VIENT AVEC UNE FREQUENCE LIMITEE

(30) Priorität: 18.05.2001 DE 10124265
(43) Veröffentlichungstag der Anmeldung: 25.02.2004
(73) Patentinhaber: Gustav Klauke GmbH, 42855 Remscheid (DE)
(72) Erfinder: FRENKEN, Egbert, 42929 Wermelskirchen (DE)
(74) Vertreter: Müller, Enno, Dipl.-Ing.
(86) Internationale Anmeldenummer: PCT/EP2002/005453
(87) Internationale Veröffentlichungsnummer: WO 2002/095264

(56) Entgegenhaltungen:
- US-A- 3 403 668
- US-A- 3 659 971
- US-A- 4 052 915

## Beschreibung

Die Erfindung betrifft zunächst ein Getriebe mit einer Getriebewelle, vorzugsweise einer Abtriebswelle eines Elektromotors, und mit der Getriebewelle in Eingriff stehenden Abtriebs-Rotationskörpern entsprechend den Merkmalen gemäß Oberbegriff von Anspruch 1.

Derartige Getriebe sind bekannt und finden zumeist Anwendung in Elektromaschinen. US-A-4 052 915 ist der nächstkommende Stand der Technik.

Im Hinblick auf den zuvor beschriebenen Stand der Technik wird eine technische Problematik der Erfindung darin gesehen, ein Getriebe der in Rede stehenden Art in vorteilhafter Weise weiterzubilden.

Diese Problematik ist zunächst und im Wesentlichen durch den Gegenstand des Anspruchs 1 gelöst, wobei darauf abgestellt ist, dass die Abtriebs-Rotationskörper in radialer Richtung mit der Getriebewelle zusammenwirken, durch Anlage an der Getriebewelle, und in Axialrichtung der Getriebewelle mit einem in der Axialrichtung beweglichen und auf die Abtriebs-Rotationskörper hin vorgespannten oder belasteten (oberen) Laufbahnkörper zusammenwirken, wobei eine Laufbahn des Laufbahnkörpers über ihren Umfang, jedenfalls in Bezug auf eine Umlauf-Kreisbahn eines Abtriebs-Rotationskörpers, höhenmäßig strukturiert ist.Zudem ist bevorzugt, dass ein Zusammenwirkungsbereich der Abtriebswelle mit den Abtriebs-Rotationskörpern einen kreisförmigen Querschnitt aufweist. Zufolge dieser Ausgestaltung ist ein Getriebe geschaffen, mittels welchem eine Rotationsbewegung der Getriebewelle in eine Axialbewegung des Laufbahnkörpers koaxial zur Getriebewelle gewandelt wird. Insbesondere wird auch eine Untersetzung von höheren Drehzahlen der Getriebewelle in eine niedrige Umlauf-Drehzahl eines oder der Abtriebs-Rotationskörper bzw. auch eines Käfigs, wie weiter unten noch erläutert, in welchem der oder die Abtriebs-Rotationskörper aufgenommen sind, erreicht. Das Getriebe, das in einem engeren Sinne auch als Reibrad-Getriebe, speziell als Planeten-Reibradgetriebe, einzuordnen ist, erbringt insbesondere auch eine Wandlung der Rotationsbewegung der Getriebewelle in eine hin- und hergehende Bewegung eines Laufbahnkörpers. Konkret handelt es sich um eine hin- und hergehende Bewegung in Richtung der Getriebewelle.

Die Erfindung erfasst aber auch die Bewegungsumkehr, d.h. die Wandlung einer hin- und hergehenden Bewegung mittels eines solchen Getriebes in eine Drehbewegung. Die Getriebewelle ist dann - betrachtet vom Getriebe aus - eine Abtriebswelle.

Durch die Belastung des Laufbahnkörpers gegen die Abtriebs-Rotationskörper ist eine stete Anlage der Abtriebs-Rotationskörper gegen die Laufbahn gegeben. Da letztere höhenmäßig strukturiert ist, ergeben sich je nach Umlaufposition der Abtriebs-Rotationskörper verschiedene axiale Positionen des Laufbahnkörpers. Entsprechend wird die Drehbewegung der Abtriebswelle in eine Pumpbewegung des Laufbahnkörpers gewandelt.Hierbei ist das Getriebe einfach aufgebaut, wobei der bevorzugt die Getriebewelle antreibende Elektromotor und die bspw. sogleich durch die Laufbahnkörper gebildete Kolbenfläche in axialer Hintereinander-Anordnung in einem Gehäuse vorgesehen werden können. Zufolge dessen ist ein stabartiges Gerätegehäuse realisierbar.

Bei einer Ausbildung des Laufbahnkörpers als Kolben ist das erfindungsgemäße Getriebe bspw. in einer Einspritzpumpe oder einer elektrisch betätigbaren Luftpumpe einsetzbar. Auch sind Anwendungen denkbar, bei welchen über den Kolben bzw. den Laufbahnkörper eine Erhöhung eines Öldruckes zur Betätigung hydraulischer oder pneumatischer Werkzeuge erreicht wird. Darüber hinaus sind auch vibrationserzeugende Anwendungen denkbar, so bspw. bei einer Anordnung des erfindungsgemäßen Getriebes in einer Putz- oder Poliezmaschine, wobei über die Getriebewelle ein entsprechendes Werkzeug gedreht werden kann und über die auf die Laufbahn einwirkenden Abtriebs-Rotationskörper und/oder der damit einhergehenden, gegebenenfalls federunterstützten Hin- und Herbewegung des Laufbahnkörpers die (Axial-)Vibration des angetriebenen Werkzeugs erzeugt wird.

In vorteilhafter weise kann die Erfindung bei einem Motor mit einer Abtriebswelle angewendet werden, vorzugsweise einen Elektromotor, wobei die Abtriebswelle eine Lagerung aufweist. Um einen Motor, vorzugsweise Elektromotor der in Rede stehenden Art hinsichtlich der Lagerung der Abtriebswelle zu verbessern, wird vorgeschlagen, dass die Lagerung aus mit der Abtriebswelle unmittelbar zusammenwirkenden Abtriebs-Rotationskörpern besteht, welche Abtriebs-Rotationskörper mit einem oberen und/oder unteren Laufbahnkörper zusammenwirken. Zufolge dieser Ausgestaltung ist eine Abtriebswellen-Lagerung gegeben, welche sich durch einen einfachen Aufbau auszeichnet. Hierbei stehen die Abtriebs-Rotationskörper mit der Abtriebswelle in Eingriff. Als besonders vorteilhaft erweist sich diese Ausgestaltung der Lagerung dann, wenn die Abtriebs-Rotationskörper in Axialrichtung der Abtriebswelle mit einem in der Axialrichtung beweglichen und auf die Abtriebs-Rotationskörper hin vorgespannten oder belasteten oberen Laufbahnkörper zusammenwirken, wobei eine Laufbahn des Laufbahnkörpers über ihren Umfang höhenmäßig strukturiert ist. Zufolge dessen ist durch die gewählte Anordnung neben einer Lagemng der Abtriebswelle auch eine Übersetzung der Drehbewegung der Abtriebswelle in eine hin- und hergehende Bewegung des Laufbahnlcörpers, insbesondere des oberen Laufbahnkörpers erreicht, so dass hierdurch etwa eine elektromotorisch angetriebene Pumpe oder ein Vibrationserzeuger geschaffen ist.

Die nachfolgend aufgeführten Vorteile und Weiterbildungen beziehen sich auf ein Getriebe mit einer Getriebewelle gemäß Anspruch 1, das vorteilhafterweise mit einem Motor mit Abtriebswelle kombinierbar ist. Der Einfachheit halber ist nachstehend die Welle des Motors bzw. des Getriebes durchgehend als Getriebewelle bezeichnet (soweit nicht auf die Alternative jeweils nochmals hingewiesen ist).

So ist in einer vorteilhaften Weiterbildung vorgesehen, dass die Laufbahn des oberen Laufbahnkörpers, d. h. des auf der dem Elektromotor abgewandten Seite der Abtriebs-Rotationskörper angeordneten Laufbahnkörpers, zur Getriebwelle hin geneigt verläuft (gesehen von dem Elektromotor in Richtung des oberen Laufbahnkörpers), wobei sie im Querschnitt mit der Längsachse der Getriebewelle zum freien Ende der Getriebswelle hin betrachtet einen spitzen Winkel einschließt. Zufolge dessen bildet die Laufbahn eine Konusfläche aus, die zu einer punkt- bzw. in Strenge ellipsenartigen Berührung zwischen den Abtriebs-Rotationskörpern und der Laufbahn führt. Diesbezüglich ist bevorzugt vorgesehen, dass die höhenmäßige Strukturierung bezüglich eines zur Getriebewelle konzentrischen Kreises gegeben ist. So ist bspw. die Laufbahn des Laufbahnkörpers mittels eines Fräsers, der jedoch abweichend von einer Kreisform geführt wird, hergestellt.

Das die Konusfläche, d. h. die Laufbahn, aufweisende Element -der Laufbahnkörper- wird bedingt durch die rückwärtige Belastung in Richtung auf die Abtriebs-Rotationskörper ausgelenkt. Hinsichtlich der Ausgestaltung der Abtriebs-Rotationskörper ist bevorzugt vorgesehen, dass diese scheibenförmig gestaltet sind. Es sind auch bspw. kugelförmige Abtriebs-Rotationskörper denkbar. Insbesondere bei einer scheibenförmigen Gestaltung erweist es sich weiter als vorteilhaft, dass die Abtriebs-Rotationskörper in einem Käfig bezüglich der Getriebewelle sich diametral gegenüberliegend gehalten sind. Zufolge dieser Ausgestaltung ist die radial fluchtende Beaufschlagung der Getriebewelle bzw. der Abtriebswelle sichergestellt.

Besonders vorteilhaft erweist sich weiter, dass die Abtriebs-Rotationskörper gegenüberliegend, also gegebenenfalls antriebs- oder motorseitig, mit einem unteren Laufbahnkörper zusammenwirken. Demzufolge sind die Abtriebs-Rotationskörper in Axialrichtung betrachtet zwischen zwei Laufbahnlcörpern gefangen, unter beidseitiger Beaufschlagung der zugeordneten Laufbahn. Auch hierbei wird bevorzugt, dass die Laufbahn des unteren Laufbahnkörpers zur Getriebewelle hin geneigt verläuft, wobei sie im Querschnitt mit der Längsachse der Getriebewelle bzw. der Abtriebswelle zum motorseitigen Ende der Getriebewelle bzw. der Abtriebswelle hin betrachtet einen spitzen Winkel einschließt. Die Neigungswinkel der Laufbahnen des oberen und des unteren Laufbahnkörpers können hierbei unterschiedliche Winkel zur Getriebewellen-Längsachse einschließen, wobei der Winkel der Laufbahn des unteren Laufbahnkörpers zur Getriebewellen-Längsachse bis zu 90° betragen kann. Diesbezüglich ist weiter denkbar, dass die Laufbahn des unteren Laufbahnkörpers höhenmäßig gleichmäßig ausgeformt ist, so dass diese Laufbahn die Funktion einer unteren, in Umlaufrichtung der Abtriebs-Rotationskörper gleichmäßigen Abstützfläche ausübt. Alternativ kann jedoch vorgesehen sein, dass die Laufbahn des unteren Laufbahnkörpers über ihren Umfang höhenmäßig strukturiert ist. Entsprechend der Ausgestaltung der Laufbahn des oberen Laufbahnkörpers ist auch beim unteren Laufbahnkörper bevorzugt eine Konusfläche ausgeformt, die zu einer punkt- bzw. in Strenge ellipsenartigen Berührung zwischen dem Abtriebs-Rotationskörperrand und der Laufbahn führt. Demzufolge wird nicht nur der obere Laufbahnkörper durch die Abtriebs-Rotationskörper in Axialrichtung ausgelenkt, sondern darüber hinaus auch durch die höhenmäßige Strukturierung der unteren Laufbahn die Abtriebs-Rotationskörper selbst und mit diesen der obere Laufbahnkörper oszillatorartig entgegen der Belastung bzw. Vorspannung bewegt. Es ist eine axiale, hin- und hergehende Bewegung. Der untere Laufbahnkörper ist unabhängig davon, ob er auch in seiner Laufbahn höhenmäßig strukturiert ist, wesentlich im Hinblick auf die Abwälzbewegung eines Abtriebs-Rotationskörpers; denn ein Abtriebs-Rotationskörper stützt sich an dem unteren Laufbahnkörper im Zuge einer Abwälzung und Anhebung des oberen Laufbahnkörpers ab. Die Beanspruchung des Laufbahnkörpers wird auf beide gegenüberliegende Rotationskörper verteilt.

Die beiden Laufbahnkörper sind gemäß einer Ausgestaltung gegenüber der Abtriebswelle und den Abtriebs-Rotationskörpern drehfest angeordnet. Um jedoch eine Hubverstellung anzubieten, ist in einer vorteilhaften Ausgestaltung vorgesehen, dass jedenfalls bei höhenmäßiger Strukturierung des unteren und oberen Laufbahnkörpers diese Laufbahnkörper in Umfangsrichtung zueinander einstellbar sind. Eine höhenmäßige Strukturierung der Laufbahn des unteren Laufbahnkörpers führt auch aufgrund der hiermit einhergehenden betriebsmäßigen Axialbewegung der Laufbahnkörper zu einer Belastung der Getriebewelle in Axialrichtung. Um hier Abhilfe zu schaffen, kann auch eine axial bewegliche Welle, gegebenenfalls aufgrund entsprechender Wellenkupplung, vorgesehen sein.

Bezüglich der Zusammenwirkung von Abtriebs-Rotationskörpern und Getriebewelle bzw. Abtriebswelle wird vorgeschlagen, dass ein Abtriebs-Rotationskörper eine Wellen-Eingriffsfläche aufweist, die sich parallel zur Achse der Getriebewelle bzw. Abtriebswelle erstreckt.
So kann diesbezüglich eine reibschlüssige Mitnahme der Abtriebs-Rotationskörper über die Getriebewelle bzw. die Abtriebswelle erfolgen. Des Weiteren ist vorgesehen, dass ein Abtriebs-Rotationskörper eine Laufbahn-Eingriffsfläche aufweist, die sich in einem gleichen Winkel zur Getriebewelle wie die Laufbahn des zugeordneten Laufbahnkörpers zur Getriebwelle erstreckt. Demzufolge sind bevorzugt bei einer scheibenförmigen Ausgestaltung der Abtriebs-Rotationskörper diese im Bereich der umlaufenden Randkanten gefast. Alternativ kann jedoch auch vorgesehen sein, dass ein Abtriebs-Rotationskörper mittels einer Randkante als Laufbahn-Eingriffsfläche mit der Laufbahn des zugeordneten Laufbahnkörpers zusammenwirkt. Weiter kann auch vorgesehen sein, dass die Randkante im Querschnitt eine gekrümmte, etwa kreisabschnittförmig gekrümmte Randkante aufweist. Hierbei ergibt sich in zusammenwirkung mit der in Umfangsrichtung konkav verlaufenden Laufbahn des Laufbahnkörpers eine besonders vorteilhafte Wälzpaarung.

Eine weitere alternative Ausführungsform sieht vor, dass die Getriebewelle bzw. die Abtriebswelle eine Umfangsverzahnung aufweist, die mit einer Umfangsverzahnung der Abtriebs-Rotationskörper kämmt. Auch derartig ausgeformte Abtriebs-Rotationskörper können in einem Käfig bezüglich der Getriebewelle bzw. der Abtriebswelle sich diametral gegenüberliegend gehalten sein. Möglich ist hingegen auch, dass die Abtriebs-Rotationskörper mit einer Innenverzahnung eines die Abtriebs-Rotationskörper und die Getriebewelle aufnehmenden Ringkörpers kämmen. Auch hierdurch ist die radial fluchtende Beaufschlagung der Getriebewelle bzw. der Abtriebswelle gewährleistet. Um im Verhältnis zu einer vorbestimmten Drehzahl der Getriebewelle bzw. der Abtriebswelle eine Frequenzerhöhung der oszillierenden Bewegung zu erreichen, können drei oder mehr Abtriebs-Rotationskörper vorgesehen sein. Entsprechend der Anzahl der Abtriebs-Rotationskörper ist auch die Laufbahn des oberen Laufbahnkörpers und gegebenenfalls die Laufbahn des unteren Laufbahnkörpers höhenmäßig strukturiert. Eine weitere Verlängerung des Hubes kann dadurch erreicht sein, dass zwei oder mehr Einheiten von Abtriebs-Rotationskörper und einem oberen Laufbahnkörper axial hintereinander vorgesehen sind.

Das erfindungsgemäße Getriebe ist ausgesprochen einfach aufgebaut. Sowohl die Abtriebs-Rotationskörper als auch die bevorzugt konisch ausgeformte Laufbahnen aufweisenden Laufbahnkörper sind einfach herstellbar. Es ergibt sich auch eine größere Laufruhe gegenüber bekannten Getrieben. Vorteilhaft ist auch, dass eine rein sinusförmige Bewegung möglich ist. Auch weist das Getriebe ein vergleichsweise geringes Gewicht und einen günstigen Raumbedarf auf. Um bei der oszillierenden Bewegung des oberen Laufbahnkörpers und gegebenenfalls der Abtriebs-Rotationskörper einer ungewollten Verlustleistung durch einen Aufpumpeffekt entgegenzuwirken, kann der obere, axial bewegliche Laufbahnkörper mit in Längserstreckung der Getriebewelle ausgerichteten Durchbrechungen versehen sein. Der Hub des oberen Laufbahnkörpers entspricht bevorzugt etwa einem Zehntel bis einem Dreißigstel des Kolbendurchmessers, d. h. des Durchmessers des Laufbahnkörpers. Wenn der obere Laufbahnkörper zugleich als Kolben dienen soll, der geschlossen ausgebildet ist, wird zweckmäßigerweise eine entsprechende Lüftung radial vorgesehen. Bspw. kann in einer das Getriebe radial umgebenden Wandung eine Lüftungsöffnung ausgebildet sein.

Nachstehend ist die Erfindung anhand der beigefügten Zeichnung, welche lediglich mehrere Ausführungsbeispiele darstellt, näher erläutert. Es zeigt:
- Fig. 1: eine perspektivische, partiell geschnittene Darstellung eines erfindungsgemäßen Getriebes in einer ersten Ausführungsform, bei Anordnung desselben in einem hydraulischen Pressgerät;
- Fig. 2: den Längsschnitt durch das Pressgerät mit Getriebe gemäß Fig. 1;
- Fig. 3: den Schnitt gemäß der Linie III-III in Fig. 2;
- Fig. 4: das Getriebe der ersten Ausführungsform in einer perspektivischen Explosionsdarstellung;
- Fig. 5: eine vergrößerte Längsschnittdarstellung durch das Getriebe, die unterste Stellung eines oberen, einen Kolben ausbildenden Laufbahnkörpers betreffend;
- Fig. 6: den Schnitt gemäß der Linie VI-VI in Fig. 5;
- Fig. 7: den Schnitt gemäß der Linie VII-VII in Fig. 5;
- Fig. 8: eine der Fig. 5 entsprechende Darstellung, jedoch die obere Totpunktstellung des oberen Laufbahnkörpers betreffend;
- Fig. 9: den Schnitt gemäß der Linie IX-IX in Fig. 8;
- Fig. 10: den Schnitt gemäß der Linie X-X in Fig. 8;
- Fig. 11: eine perspektivische Explosionsdarstellung eines Getriebes in einer zweiten Ausführungsform;
- Fig. 12: eine der Fig. 5 entsprechende Darstellung, jedoch die zweite Ausführungsform betreffend, bei einem eingestellten Null-Hub;
- Fig. 13: den Schnitt gemäß der Linie XIII-XIII in Fig. 12;
- Fig. 14: den Schnitt gemäß der Linie XIV-XIV in Fig. 12;
- Fig. 15: eine der Fig. 12 entsprechende Schnittdarstellung, jedoch nach einer um 90° um eine Abtriebsachse verlagerten Stellung von Abtriebs-Rotationskörpern;
- Fig. 16: den Schnitt gemäß der Linie XVI-XVI in Fig. 15;
- Fig. 17: den Schnitt gemäß der Linie XVII-XVII in Fig. 15;
- Fig. 18 bis 23: Darstellungen gemäß den Fig. 12 bis 17, jedoch bei einem eingestellten halben Maximalhub;
- Fig. 24 bis 29: weitere Darstellungen gemäß den Fig. 12 bis 17, jedoch bei Einstellung eines maximalen Hubes;
- Fig. 30: eine weitere perspektivische Explosionsdarstellung einer alternativen Ausführungsform des Getriebes;
- Fig. 31: einen Längsschnitt durch das Getriebe gemäß Fig. 30, mit einem oberen Laufbahnkörper in einer oberen Totpunktstellung;
- Fig. 32: den Schnitt gemäß der Linie XXXII-XXXII in Fig. 31;
- Fig. 33: den Schnitt gemäß der Linie XXXIII-XXXIII in Fig. 31;
- Fig. 34 bis 36: Darstellungen gemäß den Fig. 31 bis 33, jedoch die untere Totpunktstellung des oberen Laufbahnkörpers betreffend;
- Fig. 37: eine weitere alternative Ausgestaltung des Getriebes in einer Explosionsdarstellung;
- Fig. 38: einen Längsschnitt durch das Getriebe der Ausführungsform gemäß Fig. 37;
- Fig. 39: den Schnitt gemäß der Linie XXXIX-XXXIX in Fig. 38;
- Fig. 40: den Schnitt gemäß der Linie XL-XL in Fig. 38;
- Fig. 41: einen gegenüber der Darstellung in Fig. 38 um 90° versetzten Längsschnitt durch das Getriebe;
- Fig. 42: eine weitere Ausführungsform des Getriebes in Explosionsdarstellung;
- Fig. 43: einen Längsschnitt durch das Getriebe gemäß Fig. 42;
- Fig. 44: den Schnitt gemäß der Linie XLIV-XLIV in Fig. 43;
- Fig. 45: den Schnitt gemäß der Linie XLV-XLV in Fig. 43;
- Fig. 46 bis 48: Darstellungen gemäß den Fig. 43 bis 45, jedoch nach einer Verlagerung von Abtriebs-Rotationskörpern um eine Getriebewelle;
- Fig. 49 bis 51: weitere Darstellungen gemäß den Fig. 43 bis 45, jedoch nach einer weiteren Verlagerung der Abtriebs-Rotationskörper;
- Fig. 52: eine schematische Darstellung der Herstellung eines Laufbahnkörpers mit höhenmäßiger Strukturierung und
- Fig. 53: eine der Fig. 5 entsprechende Darstellung, mit einer wellenmäßigen Nutzung der Drehzahluntersetzung.

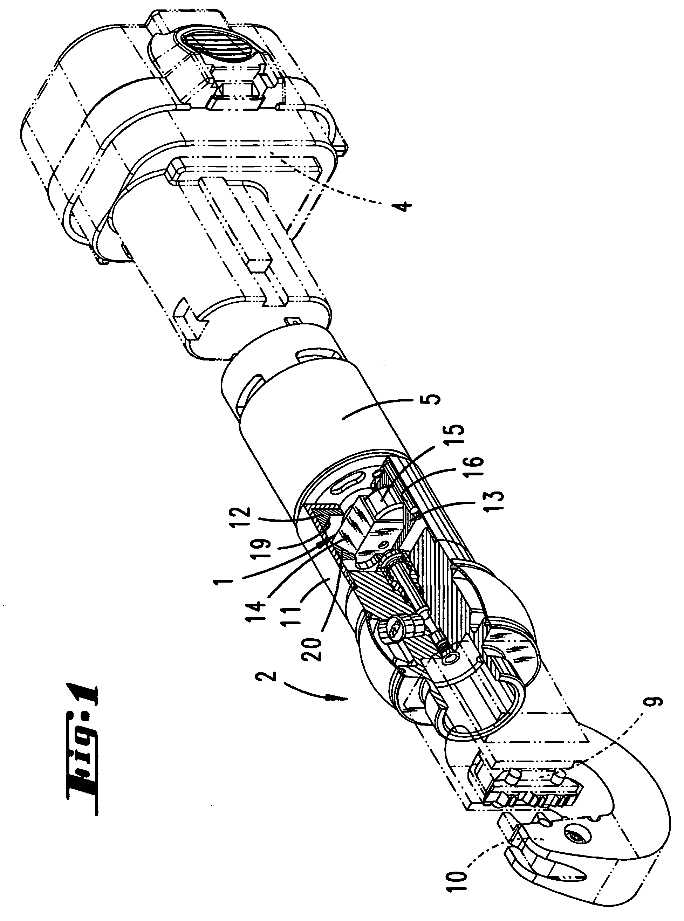

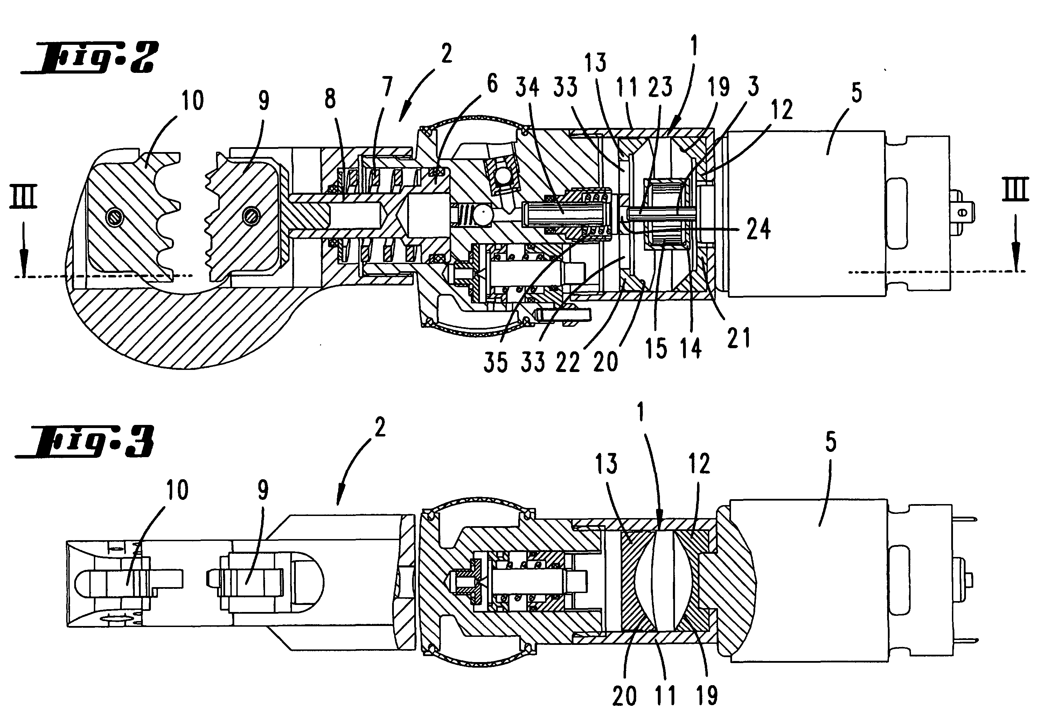

Dargestellt und beschrieben ist zunächst mit Bezug zu den Fig. 1 bis 3 ein erfindungsgemäßes Getriebe 1 in einer beispielhaften Anordnung in einem hydraulischen Pressgerät 2.

Letzteres weist einen, mit einer Getriebewelle 3 versehenen und in der dargestellten Ausführungsform mittels eines Akumulators 4 gespeisten Elektromotor 5 auf. Die Zuordnung des Akumulators 4 zu dem Pressgerät 2 ist in Fig. 1 lediglich schematisch dargestellt.

Mittels des Elektromotors 5 wird in dem Pressgerät 2 über eine Öldruckerhöhung ein Kolben 6 entgegen der Kraft einer Druckfeder 7 bewegt. Mit dem Kolben 6 ist über einen Kolbenschaft 8 eine verlagerbare Pressbacke 9 verbunden, welche im Zuge des Pressvorganges in Richtung auf eine feststehende Pressbacke 10 verlagert wird.

Durch die erfindungsgemäße, noch nachstehend näher beschriebene Ausgestaltung des Getriebes 1 ist eine Umsetzung der Rotationsbewegung der durch den Elektromotor 5 angetriebenen Getriebewelle 3 in eine oszillierende Pumpbewegung eines Pump-Kolbens 34 erreicht. Diese hin- und hergehende Pumpbewegung erfolgt in Axialrichtung der Getriebewelle 3, womit eine stabförmige Ausgestaltung des angetriebenen Gerätes -hier des Pressgerätes 2- ermöglicht ist.

Das erfindungsgemäße Getriebe kann darüber hinaus auch in anderen Geräten eingesetzt werden, bei welchen eine Pumpbewegung erreicht werden soll, so bspw. bei Einspritzpumpen oder elektromotorisch angetriebenen Luftpumpen. Darüber hinaus kann die oszillierende Bewegung des Getriebekörpers auch zur Vibrationserzeugung, bspw. bei Putz- oder Poliermaschinen, genutzt werden.

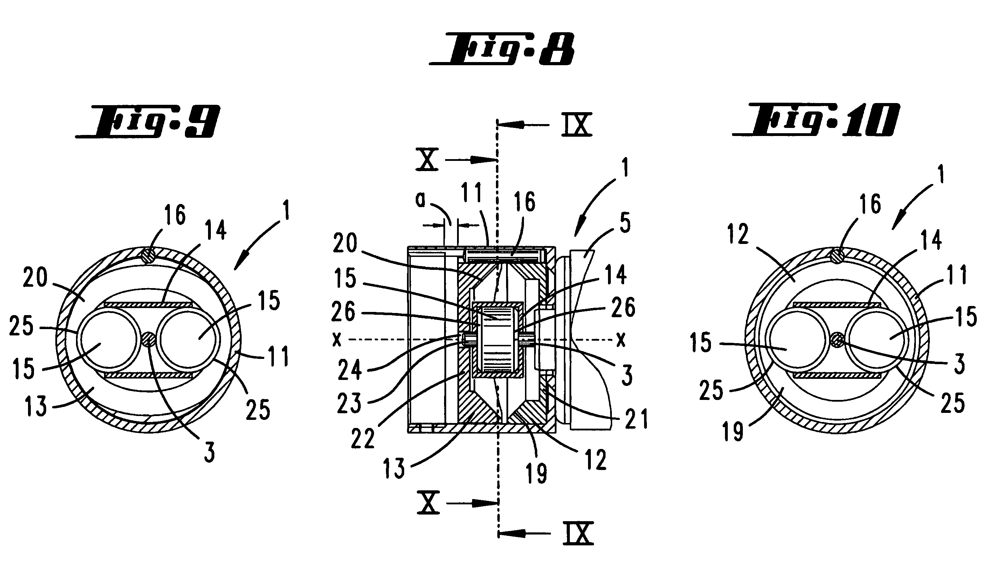

Die Fig. 4 bis 10 zeigen eine erste Ausführungsform des erfindungsgemäßen Getriebes. Dieses setzt sich im Wesentlichen aus einem in einem kreiszylindrischen Mantelgehäuse 11 angeordneten unteren Laufbahnkörper 12, einem oberen Laufbahnkörper 13 und zwei zwischen den Laufbahnkörpern 12 und 13 angeordneten, in einem Käfig 14 gehaltenen Abtriebs-Rotationskörpern 15 zusammen.

Die Laufbahnkörper 12 und 13 sind, koaxial ausgerichtet zur Getriebewelle 3 des Elektromotors 5, drehfest in dem Gehäuse 11 gehalten, wozu bei dem Ausführungsbeispiel ein Blockierungsstift 16 halbumfangsseitig in parallel zur Drehachse ausgerichtete Kerben 17 der Laufbahnkörper 12, 13 und halbumfangsseitig gegenüberliegend in einer entsprechend ausgerichtete, innenwandigen Nut 18 des Gehäuses 11 sperrend einliegt.

Jeder Laufbahnkörper 12, 13 weist Laufbahnen 19, 20 auf, die einander zugewandt sind.

Zwischen dem unteren, dem Elektromotor 5 zugewandten Laufbahnkörper 12 und dem oberen, dem Elektromotor 5 abgewandten Laufbahnkörper 13 sind die Abtriebs-Rotationskörper 15 angeordnet, welche scheibenförmig ausgebildet sind, wobei die Rotationsachsen dieser Abtriebs-Rotationskörper 15 parallel ausgerichtet sind zur Längsachse x der Abtriebswelle 3.

Die Abtriebs-Rotationskörper 15 wirken beidseitig mit ihren umlaufenen Randkanten mit den jeweils zugeordneten Laufbahnen 19, 20 der Laufbahnkörper 12, 13 zusammen.

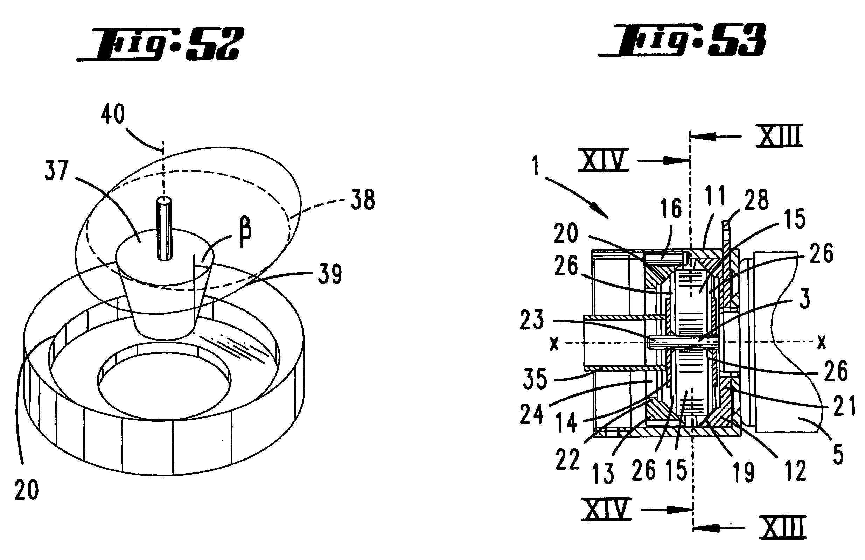

Wie erwähnt, sind die Abtriebs-Rotationskörper 15 in einem Käfig 14 gehalten derart, dass diese sich bezüglich der Getriebewelle 3 diametral gegenüberliegen.
Der Käfig 14 läuft entsprechend mit den Laufbahnkörpern zusammen um die Getriebewelle um. Die Umdrehungszahl des Käfigs ist entsprechend untersetzt zu der Umdrehungszahl der Rotationskörper. Dieses kann auch konstruktiv genutzt werden, wie sich etwa aus dem Ausführungsbeispiel der Fig. 53 ergibt.

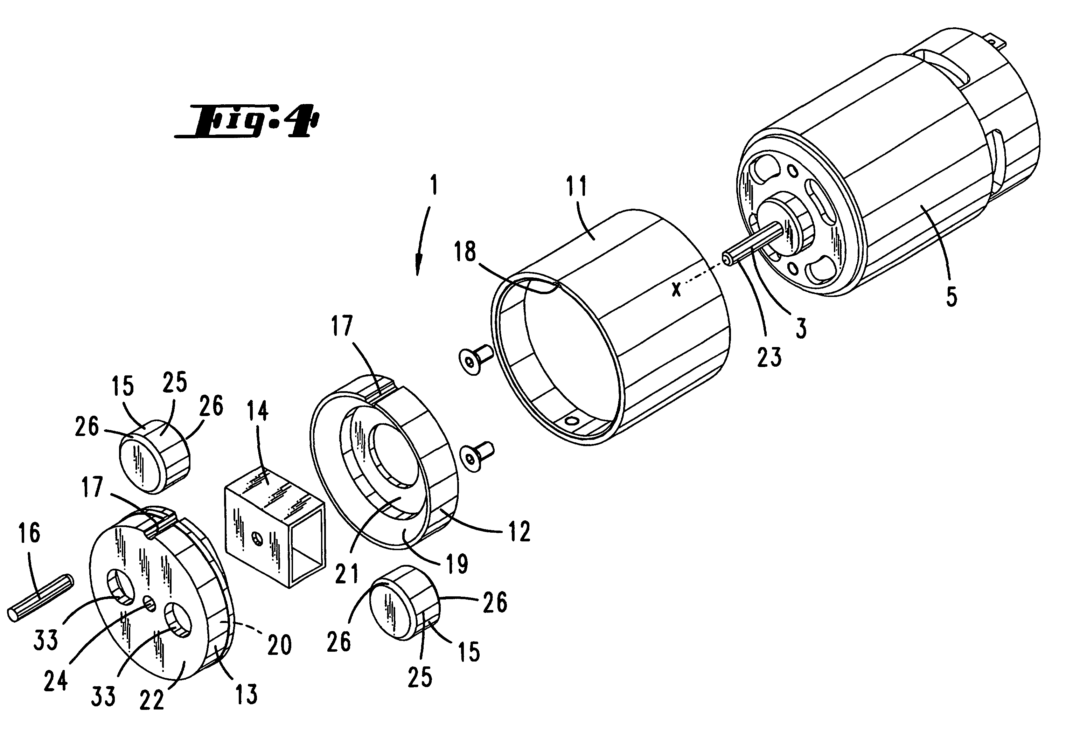

Fig. 53 stellt eine Darstellung entsprechend Fig. 5 dar, wobei jedoch der Laufbahnkörper 13 lediglich als Umfangsring ausgebildet ist und eine Hohlwelle 35, angebunden an bzw. fest verbunden mit dem Käfig 14 den Laufbahnkörper 13 nach außen durchsetzt. Die Hohlwelle 35 kann genutzt werden, wenn die gegenüber der Welle 3 geringere Umlaufgeschwindigkeit des Käfigs 14 für weitere Zwecke genutzt werden soll und auch die Welle 3 zugleich benutzt werden soll (hindurchgeführt durch die Hohlwelle). Will man nicht die Welle 3 zugleich auch nutzen, muss die Hohlwelle 35 nicht als Hohlwelle gestaltet sein. Sie kann auch dann als Massivwelle gestaltet sein.

Die Getriebswelle 3 durchsetzt den Boden 21 des unteren Laufbahnkörpers 12 sowie mittig den Käfig 14, wobei ein Abtriebswellen-Ende 23 rückwärtig des Käfigs 14 über diesen hinausragt.

Der Boden 22 des oberen Laufbahnkörpers 13 weist mittig, d. h. in axialer Verlängerung der Abtriebswelle 3 eine an den Wellendurchmesser angepasste Bohrung 24 auf.

Die Abtriebs-Rotationskörper 15 weisen jeweils eine durch die umlaufende Mantelfläche gebildete Wellen-Eingriffsfläche 25 auf, welche sich parallel zur Längsachse x der Abtriebswelle 3 erstreckt. Diese Eingriffsflächen 25 sind, wie auch die Oberfläche der Abtriebswelle 3, glattflächig ausgebildet, wonach die Zusammenwirkung von Abtriebswelle 3 und Abtriebs-Rotationskörpern 15 reibschlüssig erfolgt.

Die Getriebewelle 3 weist im Bereich der Zusammemwirkung mit den Abtriebs-Rotationskörpern 15 einen kreisförmigen Querschnitt auf. Der Zusammenwirkungsbereich zwischen der Abtriebswelle 3 und den Abtriebs-Rotationskörpern 15 ist aufgrund der oszillierenden Bewegung der Abtriebs-Rotationskörper 15 relativ zu der Getriebewelle 3 entsprechend größer (axiale Länge) als die Höhe (axiale Länge) der Welleneingriffsfläche 25 der Abtriebs-Rotationskörper 15. Die Abtriebs-Rotationskörper 15 sind ständig, während eines gesamten Zyklus der oszillierenden Bewegung vermittels der Welleneingriffsflächen 25 in Anlage an der Getriebewelle 3. Die Getriebewelle 3 hat in dem Zusammenwirkungsbereich, bevorzugt auch darüber hinaus, weiter bevorzugt auf ihrer gesamten Länge, denselben kreisförmigen Querschnitt.

Die Laufbahnen 19, 20 der beiden Laufbahnkörper 12, 13 verlaufen zur Getriebswelle 3 hin geneigt, wobei die Laufbahn 19 des unteren Laufbahnkörpers 12 im Querschnitt mit der Längsachse x der Getriebewelle 3 zum motorseitigen Ende der Getriebewelle 3 hin betrachtet einen spitzen Winkel Alpha und die Laufbahn 20 des oberen Laufbahnkörpers 13 gleichfalls im Querschnitt mit der Längsachse x der Getriebewelle 3 zum freien Ende 23 der Getriebewelle 3 hin betrachtet einen spitzen Winkel Beta einschließt. In dem Ausführungsbeispiel sind Winkel Alpha und Beta von jeweils ca. 45° gewählt.

Zufolge dieser Ausgestaltung der Laufbahnen 19, 20 sind Konusflächen geformt, mit welchen die umlaufenden Randkanten der Abtriebs-Rotationskörper 15 zusammenwirken. Diese, Laufbahn-Eingriffsflächen 26 ausbildenden Randkanten sind -wie dargestellt- bevorzugt gefast, so dass die Eingriffsflächen 26 sich in einem gleichen Winkel zur Getriebewelle 3 wie die zugeordneten Laufbahnen 19 bzw. 20 zur Getriebewelle 3 erstrecken.

Der obere Laufbahnkörper 13 ist desweiteren in dem Mantelgehäuse 11 in Axialrichtung verschiebbar gehalten, wobei dieser in Richtung auf die Abtriebs-Rotationskörper 15 hin vorgespannt ist. Bei Einsatz des Getriebes 1 in einem wie eingangs beschriebenen Pressgerät 2 ist diese Vorspannung erreicht durch die auf den Pump-Kolben 34 wirkende Druckfeder 35. Grundsätzlich kann auch die Gewichtskraft eines auf den oberen Laufbahnkörper wirkenden Teiles ausreichend sein.

Bedingt durch diese Vorspannung des oberen Laufbahnkörpers 13 werden die Abtriebs-Rotationskörper 15 stets nach axial innen hin beaufschlagt, so dass der Reibschluss zwischen diesen und der Getriebswelle 3 gewährleistet ist.

Die Laufbahn 19 des unteren Laufbahnkörpers 12 ist, bezogen auf einen Grundriss, entsprechend einer Kreisform aus dem Laufbahnkörper 12 gefräst. Zufolge dessen wirken die Laufbahn-Eingriffsflächen 26 der Abtriebs-Rotationskörper 15 mit einer kreisförmigen Umlaufbahn der unteren Laufbahn 19 zusammen.

Ist die Laufbahn 20 des oberen Laufbahnkörpers 13 gleich der unteren Laufbahn 19, d. h. im Grundriss kreisförmig hergestellt, so ist durch diese Anordnung eine einfach herzustellende, montagefreundliche und toleranzunabhängige (Antriebs-) Wellen-Lagerung realisiert. Um darüber hinaus mittels dieser Anordnung auch eine Kolbenpumpe oder einen Vibrationserzeuger zu erstellen, ist die Laufbahn 20 des oberen Laufbahnkörpers 13 bspw. mittels eines Fräsers abweichend von einer Kreisform hergestellt, so dass sich bei einer wie dargestellten Anordnung ein ellipsenartiger Grundriss der oberen Laufbahn 20 ergibt, dies bei stets gleichbleibendem Konuswinkel Beta zur Getriebewelle 3. Zufolge dessen ist die Laufbahn 20 des oberen Laufbahnkörpers 13 in Bezug auf die mit dieser, auf einer Kreisbahn umlaufenden, zusammenwirkenden Abtriebs-Rotationskörper 15, aus Sicht der Abtriebs-Rotationskörper, über den Umfang höhenmäßig strukturiert .

Zufolge dieser Laufbahnausgestaltung ergibt sich durch die Vorspannung eine höhenmäßige Anpassung des oberen Laufbahnkörpers 13 durch Axialverlagerung desselben im Zuge des Umlaufs der, durch die Getriebewelle 3 angetriebenen, Abtriebs-Rotationskörper 15.

Die Darstellungen in den Fig. 5 bis 10 zeigen Stellungen der Abtriebs-Rotationskörper 15, in welchen letztere die Laufbahnzonen des oberen Laufbahnkörpers 13 mit auf die Längsachse x bezogenem geringstem Radius des ellipsenartigen Grundrisses durchlaufen. Zufolge dessen ist der obere Laufbahnkörper 13 in Art eines Kolbens in die axial oberste Stellung verbracht (vergl. Fig. 5 bis 7).

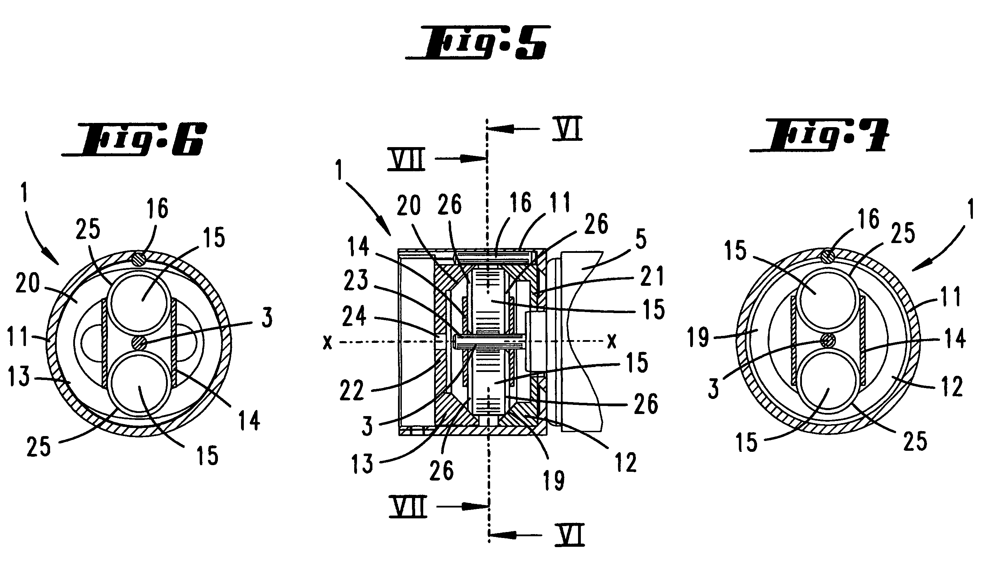

Im Zuge der weiteren Rotation der Abtriebs-Rotationskörper 15 durchlaufen diesedie Laufbahnzonen mit vergrößertem Radius des ellipsenartigen Grundrisses, was aufgrund der konisch gleichmäßigen Ausgestaltung der Laufbahn 20 eine Verlagerung des oberen Laufbahnkörpers 13 aufgrund der gegebenen Vorspannung in eine unterste Stellung, d. h. in Richtung auf die Abtriebs-Rotationskörper 15 hin, zur Folge hat (vgl. Fig. 8 bis 10). Das stetige Umlaufen der Abtriebs-Rotationskörper 15 bewirkt entsprechend eine oszillierende Bewegung des oberen Laufbahnkörpers 13.

Die Darstellungen der Fig. 5 (bzw. 6, 7) und 8 (bzw. 9, 10) stellen also Schnittebenen durch axial unterschiedlich liegende Berührungspunkte der Abtriebs-Rotationskörper 15 mit dem Laufbahnkörper 13 dar.

Hierbei ist ein Maß a des Hubs abhängig vom Verhältnis der unterschiedlichen Radien der Laufbahnzonen.

In Fig. 52 ist schematisch eine mögliche Art der Herstellung eines Laufbahnkörpers mit einem im Sinne vorliegender Anmeldung höhenmäßig strukturierten Laufbahn 20 schematisch dargestellt. Ein Fräser 37 wird im Hinblick auf seine Drehachse 40 entlang einer Ellipsenbahn 39 geführt. Der Fräserwinkel Beta ergibt die konische Gestaltung der Laufbahn 20. Die Abweichung der Ellipse 39 gegenüber einer theoretischen Kreisbahn 38 ergibt, bezogen auf die theoretische Kreisbahn 38, die höhenmäßige Strukturierung der Laufbahn 20.

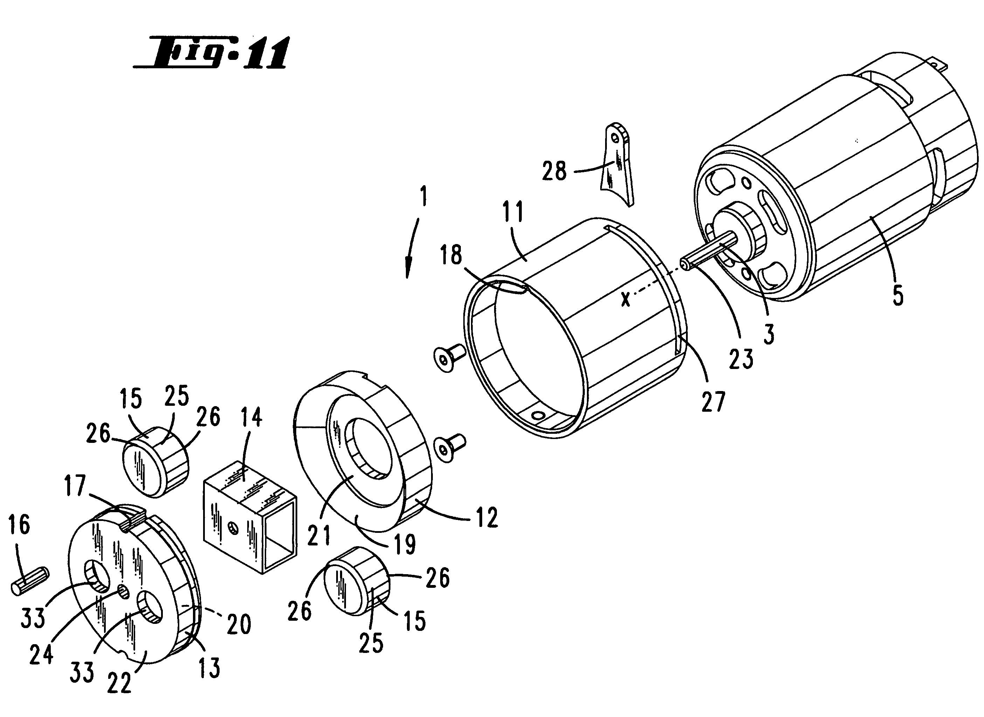

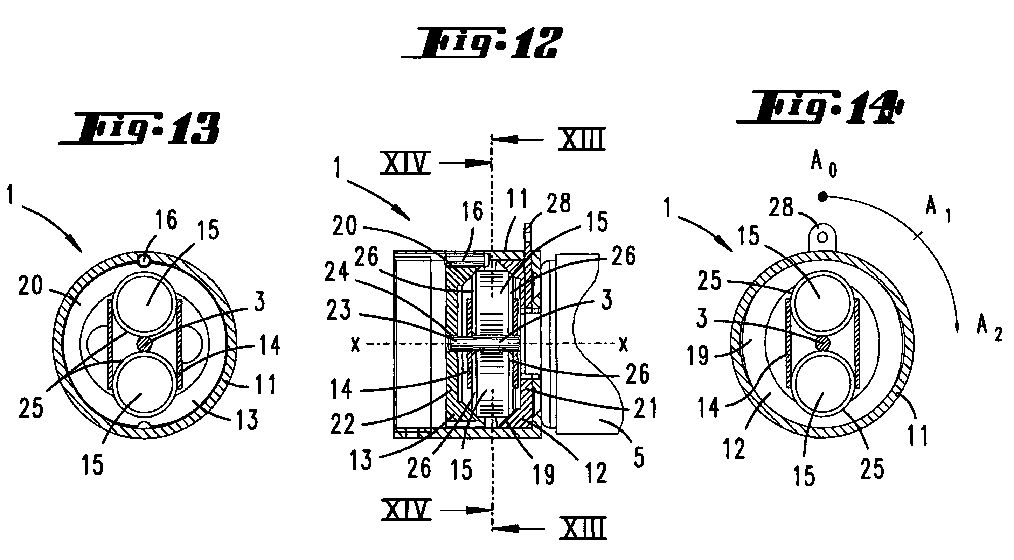

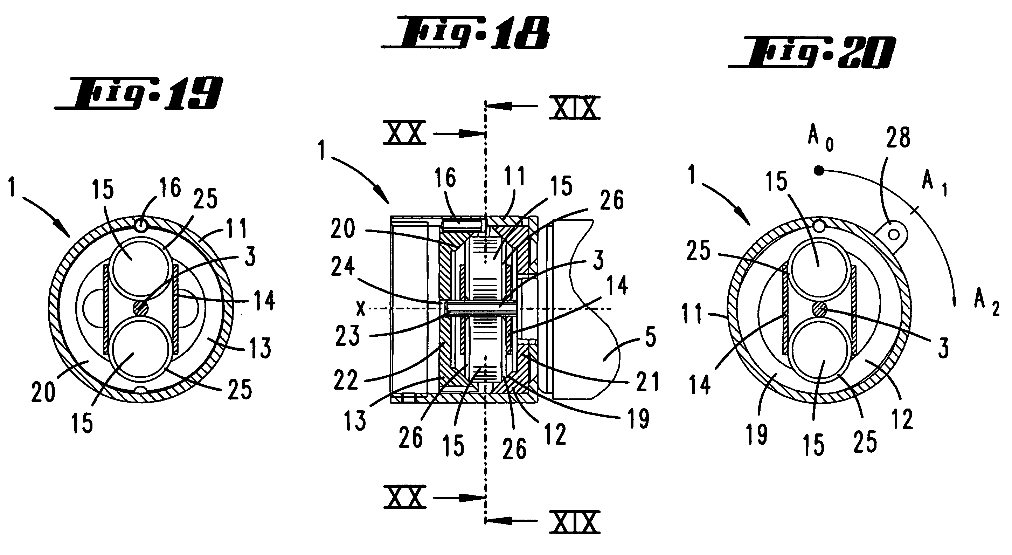

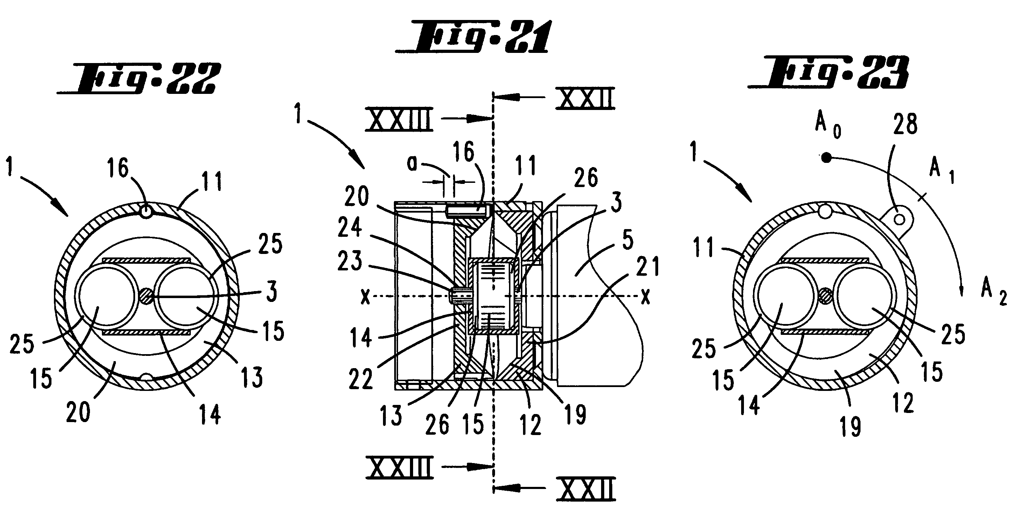

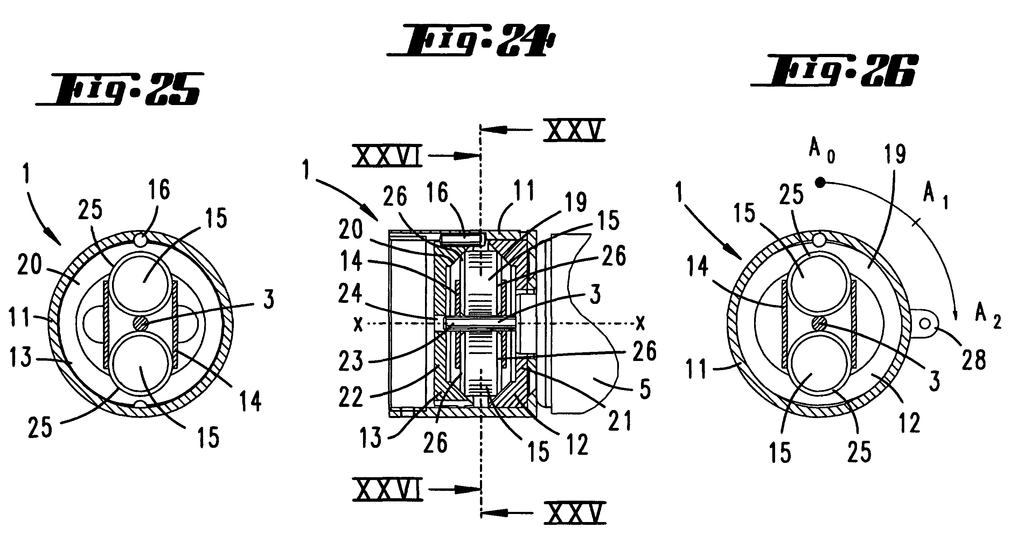

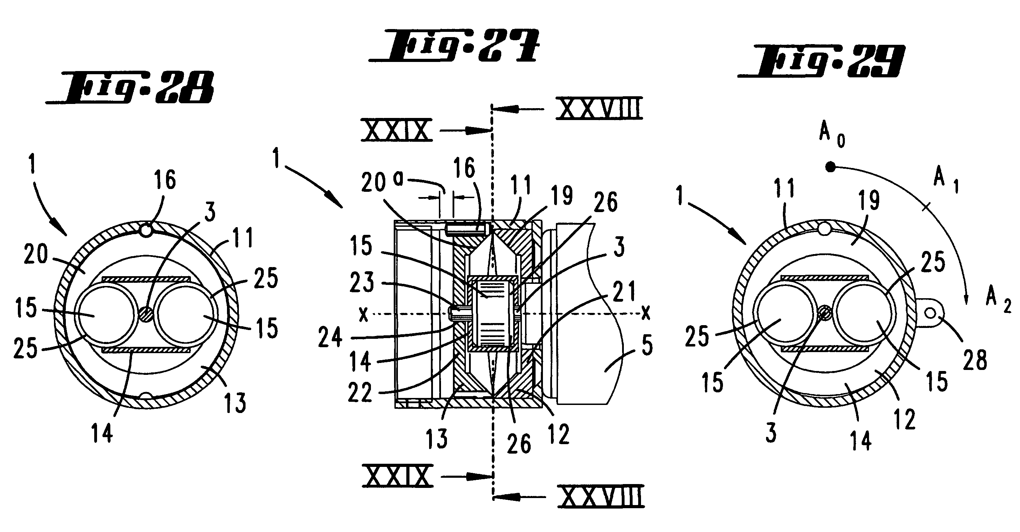

Entgegen dem zuvor beschriebenen Ausführungsbeispiel mit asymmetrischen Laufbahnen 19 und 20 zeigen die Fig. 11 bis 29 eine Ausführungsform, bei welcher die Laufbahnen 19 und 20 symmetrisch, d. h. mit über den jeweiligen Umfang höhenmäßig gleich (bezogen auf eine Kreisbahn bedeutet dies: gleich unterschiedlich) strukturiert sind. Dies bietet die Möglichkeit einer automatischen (etwa automatische Anpassung an den Betriebsdruck bzw. Gegendruck auf den oberen Laufbahnkörper), manuellen oder motorischen Hubverstellung, wozu der untere Laufbahnkörper 12 über einen Drehwinkel von bevorzugt 90° in dem Mantelgehäuse 11 drehverlagerbar ist. Eine jeweilige umfangsmäßige Stellung der Laufbahnkörper zueinander ist dann auch geeignet sperrbar, etwa durch eine lösbare Raste, um die während des Betriebs auftretenden Umfangskräfte ohne Verstellung der gewählten Stellung beizubehalten. Die Halte- und Verstellkräfte sind jedoch überraschend gering. Zur Handhabung ist eine, an den unteren Laufbahnlcörper 12 befestigte und das Mantelgehäuse 11 im Bereich eines Längsschlitzes 27 durchsetzende Handhabungslasche 28 vorgesehen.

Mit Hilfe dieser Handhabungslasche 28 ist eine manuelle Drehverlagerung des oberen Laufbahnkörpers 13 erreichbar, dies bei drehfester Anordnung des oberen Laufbahnkörpers 13. Demzufolge sind die Laufbahnkörper 12, 13 umfangsmäßig zueinander einstellbar.

Die Fig. 12 bis 17 zeigen die Funktion des Getriebes 1 bei einer Stellung A0 des unteren Laufbahnkörpers 12, in welcher Stellung A0 das Maß a des Hubs gleich Null ist. Die Laufbahnen 19, 20 der Laufbahnköxper 12 und 13 sind zueinander um 90° versetzt angeordnet, so dass einem Tal der höhenmäßigen Strukturierung einer Laufbahn ein Berg der anderen Laufbahn gegenübersteht. Die über die Getriebwelle 3 umlaufenden Abtriebs-Rotationskörper 15 bewirken demnach keine höhenmäßige, d. h. axiale Verlagerung des oberen Laufbahnkörpers 13. Vielmehr wälzen die Abtriebs-Rotationskörper 15 entsprechend der höhenmäßigen Strukturierung der Laufbahnen 19, 20 parallel zur Längsachse x über die Getriebewelle 3 mitsamt dem die Abtriebs-Rotationskörper haltenden Käfig 14.

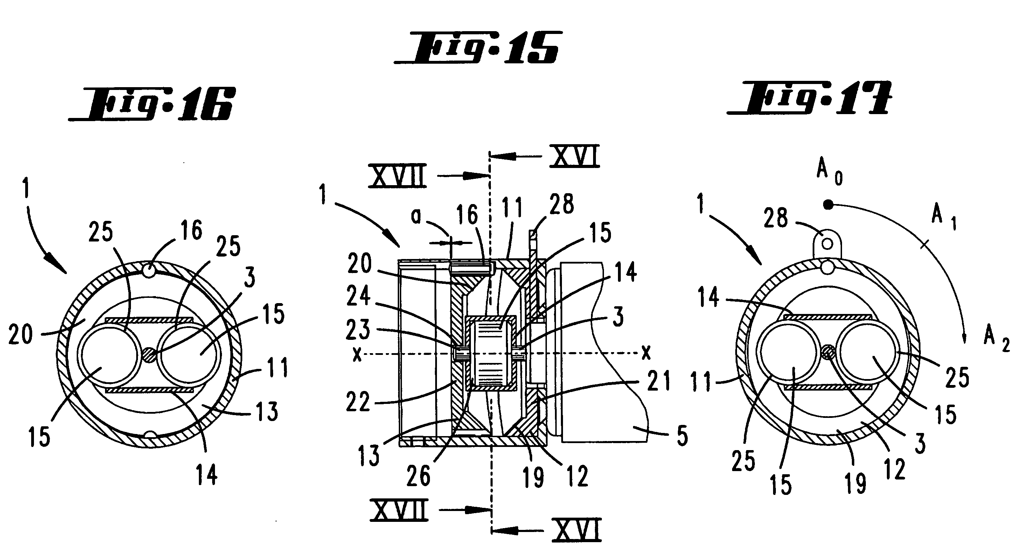

In den Fig. 18 bis 23 ist der untere Laufbahnkörper 12 in eine Stellung A1 drehverlagert, welche Stellung dem halben maximalen Hub entspricht. Hier sind die Laufbahnen 19 und 20 der Laufbahnkörper 12 und 13 umfangsmäßig um 45° zueinander versetzt. In dieser halben Maximalstellung ist die aus der Null-Stellung bekannte, oszillierende Bewegung der Abtriebs-Rotationskörper 15 auf der Getriebewelle 3 überlagert von einer Hin- und Herbewegung des oberen Laufbahnkörpers 13 entlang der Längsachse x.

Die maximale Hubverstellung A2 ist in den Fig. 24 bis 29 gezeigt. Hierbei sind die Laufbahnen 19, 20 durch Verschwenkung des unteren Laufbahnkörpers 12 um 90° zur Null-Stellung umfangsmäßig hinsichtlich der ellipsenförmigen Herstellungs-Grundkontur gleich ausgerichtet, so dass einem Berg der höhenmäßigen Strukturierung der einen Laufbahn gleichfalls ein Berg der anderen Laufbahn gegenüberliegt. Entsprechend sind auch die Täler der höhenmäßigen Strukturen gegenüberliegend ausgerichtet. Zufolge dessen ist ein maximales Maß a des Hubes erreicht.

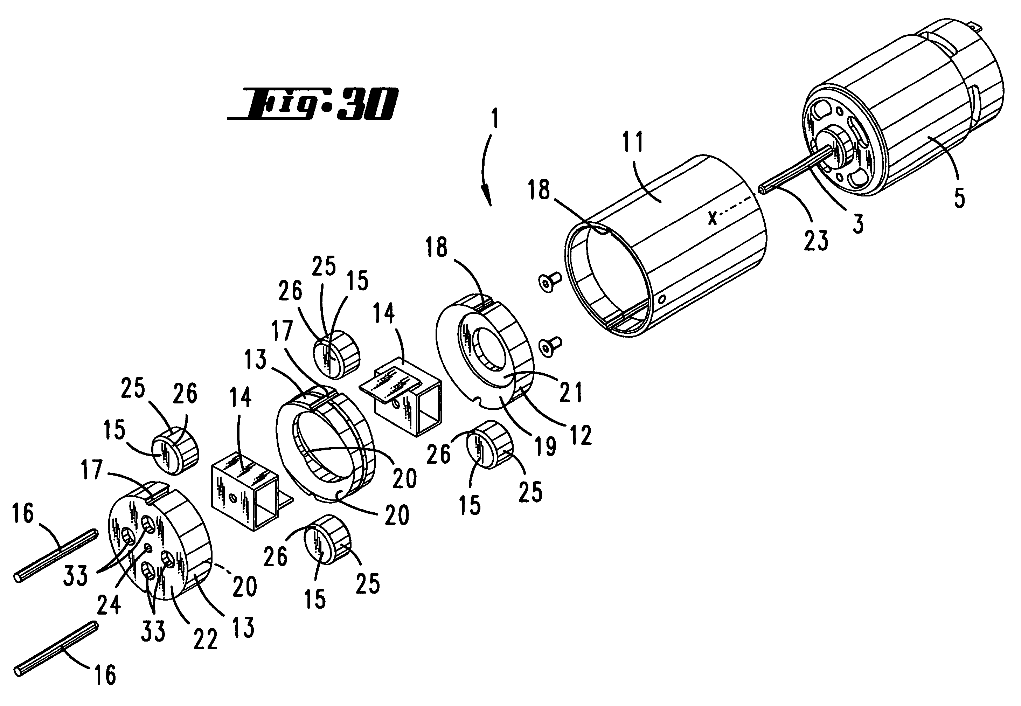

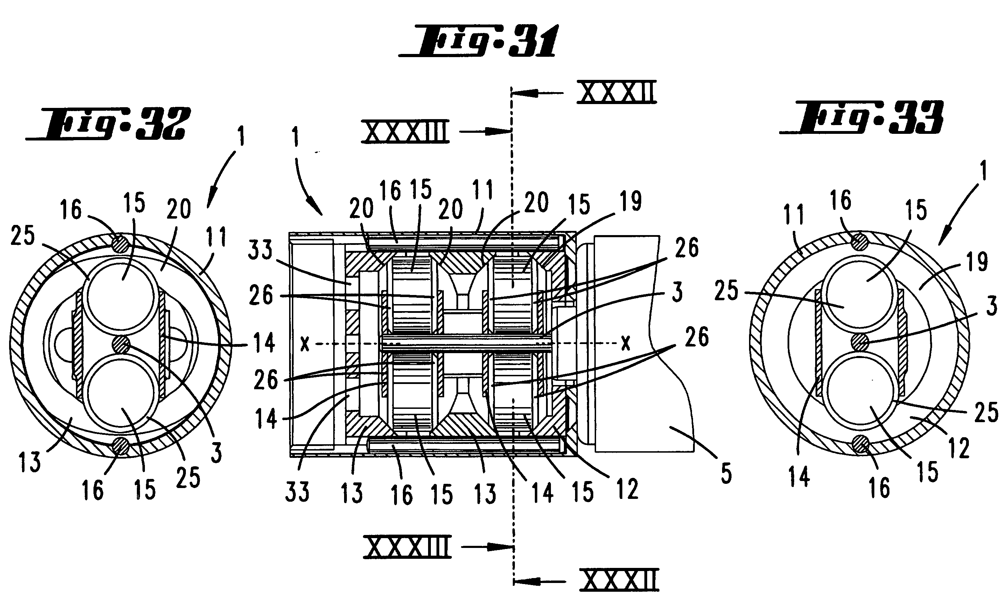

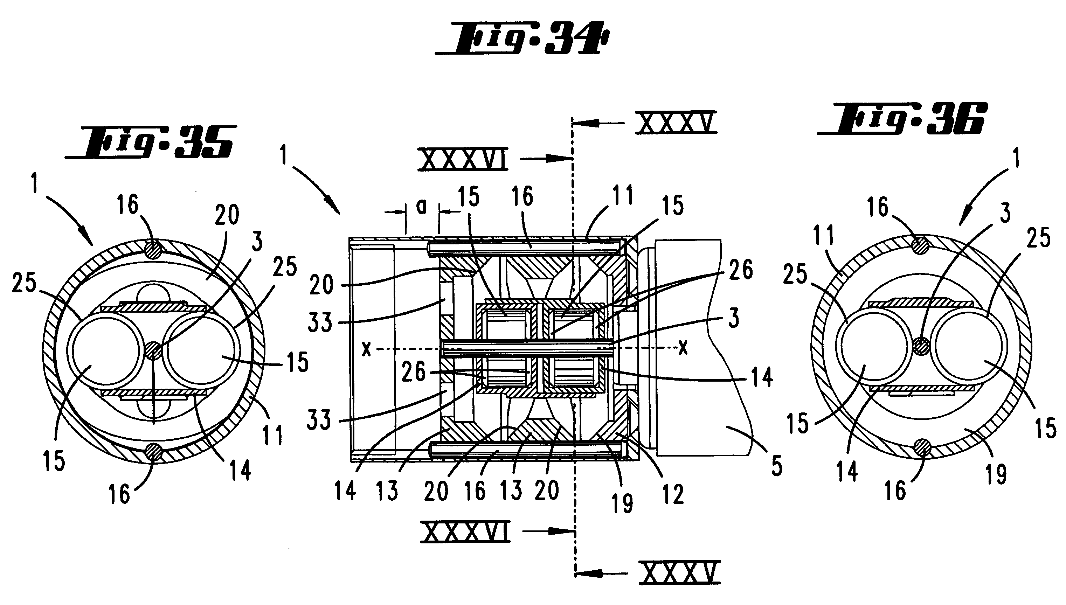

Eine dritte Ausführungsform des erfindungsgemäßen Getriebes 1 ist in den Fig. 30 bis 36 dargestellt. Hierbei handelt es sich im Wesentlichen um ein bezüglich der Huberzeugung (bezüglich bspw. Drehzahl einstufig) zweistufiges Getriebe gemäß der ersten Ausführungsform mit jeweils zwei Abtriebs-Rotationskörpern 15 je Stufe. Auch hier ist ein unterer, dem Elektromotor 5 zugewandter Laufbahnkörper 12 mit einer höhenmäßig gleichmäßig strukturierten Laufbahn 19 vorgesehen.

Der für die erste, d. h. dem Elektromotor 5 zugewandte Stufe zuständige obere Laufbahnkörper 13 ist in Axialrichtung betrachtet beidseitig mit einer Laufbahn 20 versehen. Demnach sind diese Laufbahnen 20 des mittleren Laufbahnkörpers höhenmäßig strukturiert, wobei eine Laufbahn 20 der ersten Stufe und die andere Laufbahn 20 der zweiten Stufe zugewandt zugeordnet ist.

Der die zweite Stufe abschließende, entfernt zu dem Elektromotor 5 angeordnete obere Laufbahnkörper 13 weist eine Laufbahn 20 auf, die höhenmäßig wie die Laufbahn 19 des unteren Laufbahnkörpers 12 gleichmäßig ausgeformt ist.

Die jeder Stufe zugeordneten Paare von Abtriebs-Rotationskörpern 15 sind jeweils in einem Käfig 14 bezüglich der Getriebewelle 3 diametral gegenüberliegend gehalten, wobei diese Paare von Abtriebs-Rotationskörpern 15 unabhängig voneinander auf der Getriebewelle 3 im Zuge der Rotationsbewegung verlagerbar sind.

Durch die gewählte Zweistufigkeit des Getriebes 1 ist ein erhöhtes Hubmaß a erreicht.

Wie aus den Darstellungen zu erkennen, sind hier wie auch in dem ersten Ausführungsbeispiel alle Laufbahnkörper mittels Blockierungsstiften 16 drehgesichert.

Alternativ kann hier jedoch auch vorgesehen sein, sowohl die unterste Laufbahn der ersten Stufe als auch die oberste Laufbahn der zweiten Stufe höhenmäßig zu strukturieren und den mittleren Laufbahnkörper zur Huberstellung drehverlagerbar in dem Gehäuse 11 zu haltern, so dass ein zweistufiges Getriebe mit einer Hubverstellung -wie sie anhand des zweiten Ausführungsbeispieles beschrieben wurde- erreicht werden kann.

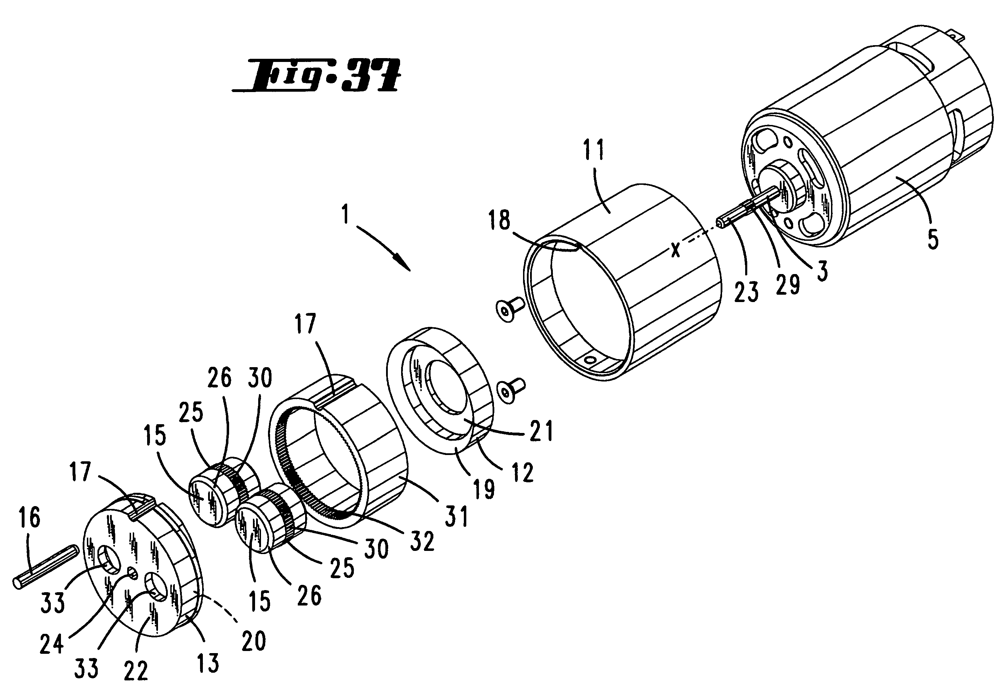

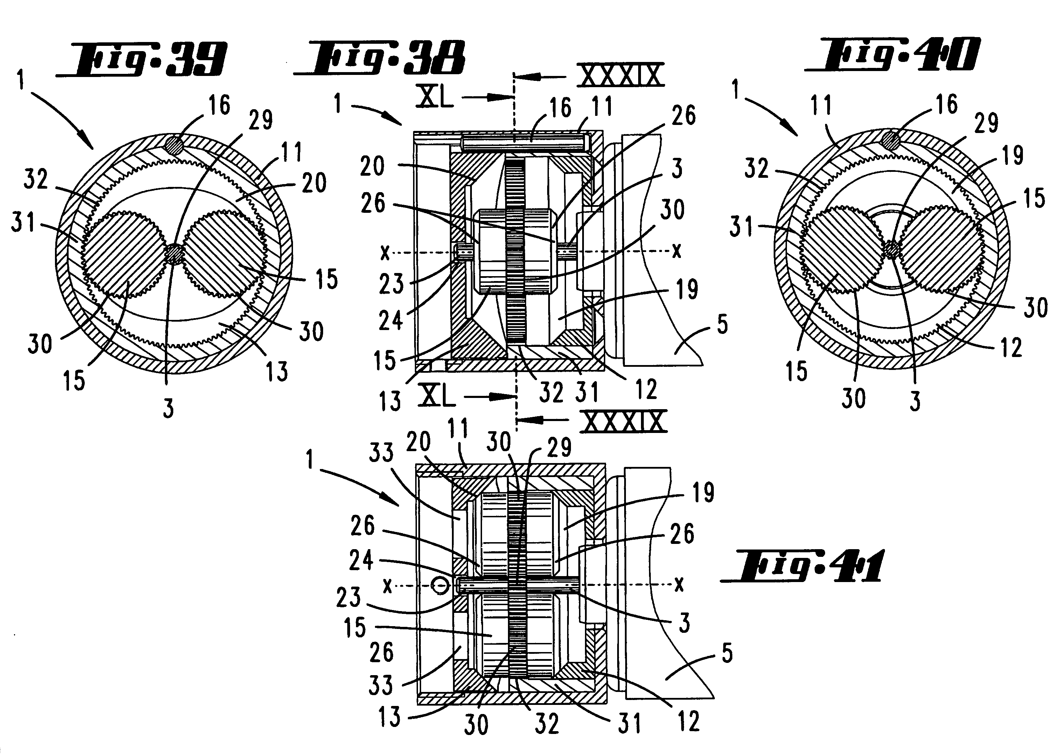

Des weiteren kann auch eine Ausführung des Getriebes gemäß den Fig. 37 bis 41 gewählt sein. Hierbei handelt es sich zunächst im Wesentlichen um ein Getriebe gemäß der ersten Ausführungsform, wobei hier jedoch die Abtriebswelle 3 eine Umfangsverzahnung 29 aufweist, die mit einer Umfangsverzahnung 30 der Abtriebs-Rotationskörper kämmt. Zudem ist in dem Gehäuse 11 ein, die Abtriebs-Rotationskörper 15 und die Getriebewelle 3 aufnehmender Ringkörper 31 vorgesehen. Dieser besitzt eine Innenverzahnung 32, die mit der Umfangsverzahnung 30 der Abtriebs-Rotationskörper 15 kämmt.

Wie aus den Darstellungen zu erkennen, sind asymmetrische Laufbahnen 19, 20 vorgesehen. Dem entsprechend behalten die Abtriebs-Rotationskörper 15 ihre axiale Position auf der Getriebewelle 3. Sind hingegen symmetrische Laufbahnen 19, 20 gemäß dem zweiten Ausführungsbeispiel vorgesehen, so sind, bedingt durch die axiale Verlagerbarkeit der Abtriebs-Rotationskörper 15, die Umfangsverzahnung 29 der Getriebewelle 3 sowie die Innenverzahnung 32 des Ringkörpers 31 in ihrer in Achsrichtung gemessenen Länge entsprechend anzupassen.

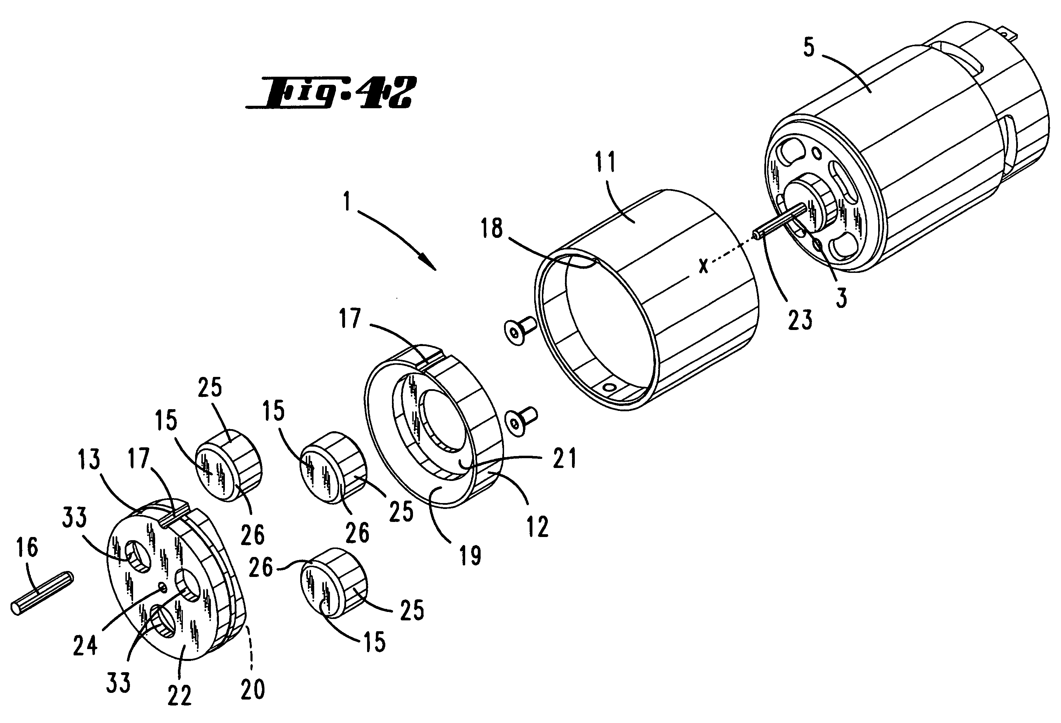

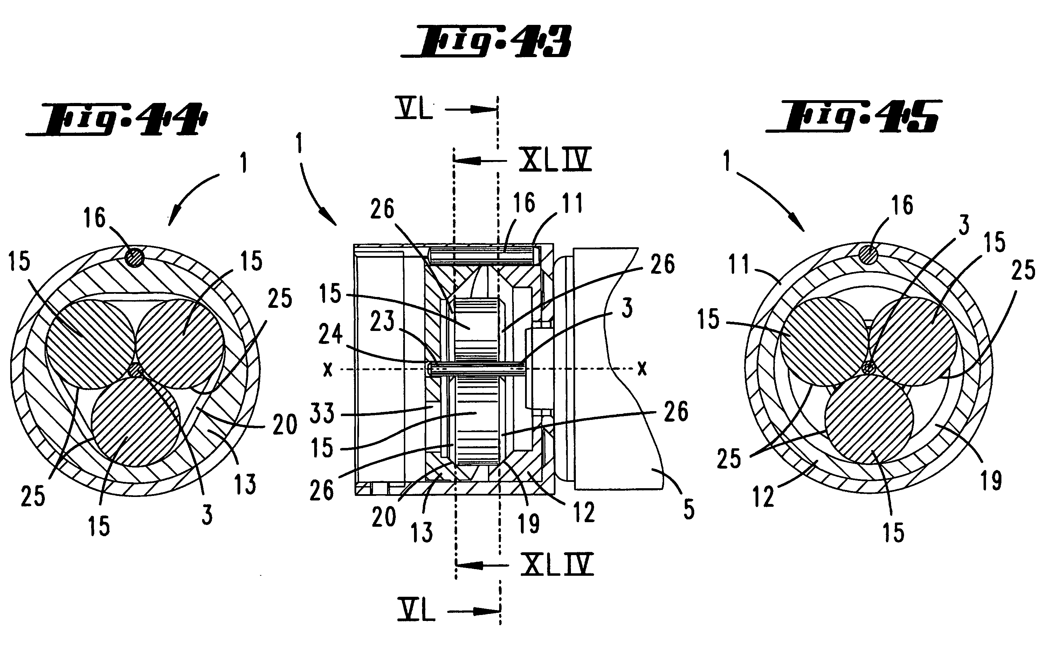

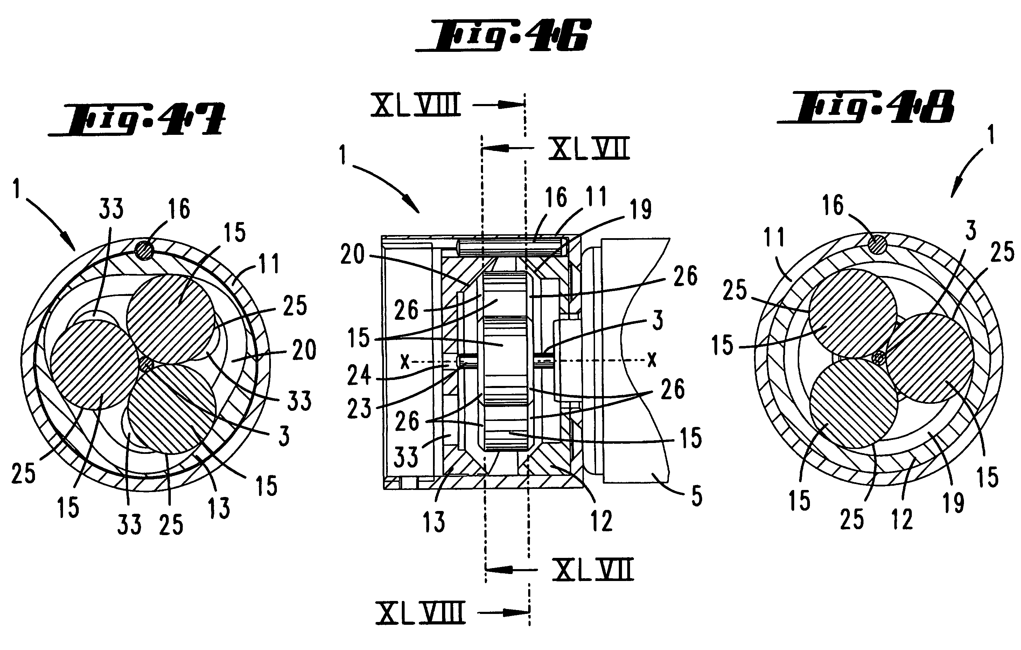

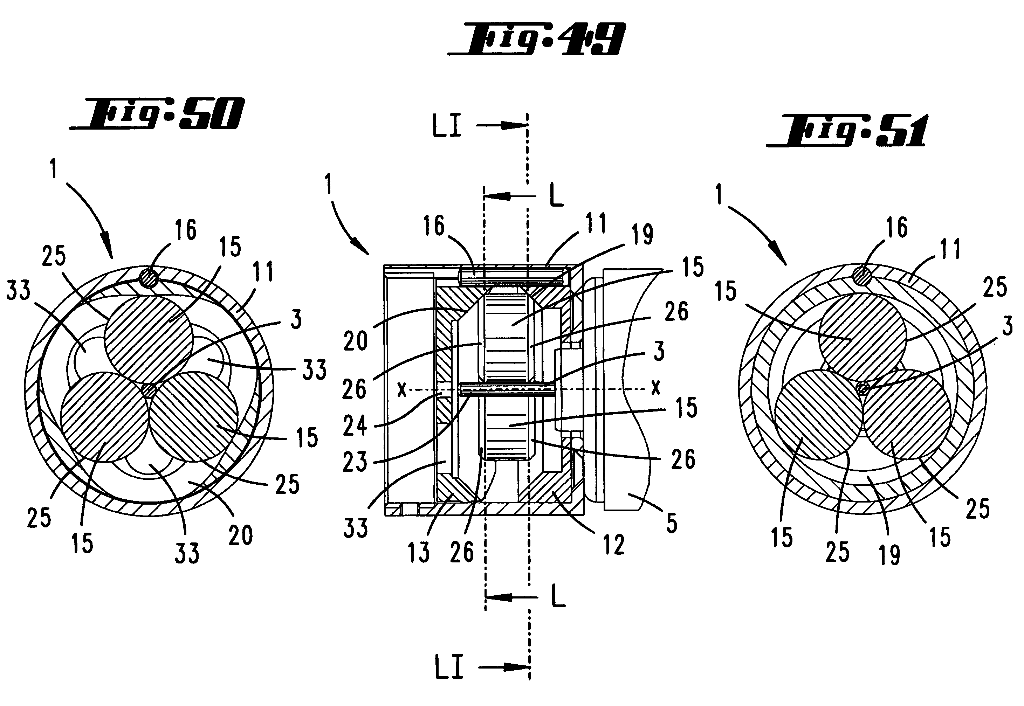

Schließlich zeigen die Fig. 42 bis 51 eine weitere alternative Ausgestaltung des Getriebes 1 mit asymmetrisch ausgebildeten Laufbahnen 19, 20, d. h. einer unteren, höhenmäßig gleichmäßig ausgebildeten Laufbahn und einer oberen höhenmäßig strukturierten Laufbahn 20.

Entgegen den zuvor beschriebenen Ausführungsbeispielen sind hier drei Abtriebs-Rotationskörper 15 um die Abtriebswelle 3 positioniert. Durch entsprechende Grundrissausbildung der oberen, höhenmäßig strukturierten Laufbahn 20 ist durch diese Maßnahme eine höhere Frequenz erreichbar. Hierzu weist die obere Laufbahn 20 einen dreieckförmigen Grundriss mit an die Radien der Abtriebs-Rotationskörper 15 angepasst ausgerundeten Eckbereichen.

Durch die Anordnung von drei Abtriebs-Rotationskörpern 15 wird bei jeweils 120° der Umlaufbewegung der Maximalhub des einen Kolben- oder Vibrationsköxper bildenden oberen Laufbahnkörper 13 erreicht.

Um bei der Hubbewegung des oberen Laufbahnkörpers 13 einem, die Funktion negativ beeinflussenden Unterdruckaufbaues in dem Getriebe 1 zu verhindern, sind bevorzugt im Boden 22 des oberen Laufbahnkörpers 13 Durchbrüche 33 vorgesehen.

## Patentansprüche

1. Getriebe (1) mit einer Getriebewelle (3), vorzugsweise einer Abtriebswelle (3) eines Elektromotors (5), und mit der Getriebewelle (3) in Eingriff stehenden Abtriebs-Rotationskörpern (15), die in radialer Richtung mit der Getriebewelle zusammenwirken, durch Anlage an der Getriebewelle, und in Axialrichtung der Getriebewelle mit einem in der Axialrichtung beweglichen und auf die Abtriebs-Rotationskörper (15) hin belasteten oberen Laufbahnkörper zusammenwirken, wobei ein Zusammenwirkungsbereich der Getriebewelle einen kreisförmigen Querschnitt aufweist, **dadurch gekennzeichnet, dass** eine Laufbahn (20) des Laufbahnkörpers (13) jedenfalls in Bezug auf eine Umlauf-Kreisbahn der Abwärts-Rotationskörper (15) über ihren Umfang höhenmäßig strukturiert ist derart, dass sich in Richtung der Getriebewelle eine hin- und hergehende Bewegung des Laufbahnkörpers (13) ergibt.

2. Getriebe nach Anspruch 1, **dadurch gekennzeichnet, dass** die Drehachsen der Abtriebs-Rotationskörper (15) auf einer Kreisbahn umlaufen.

3. Getriebe nach einem der vorhergehenden Ansprüche, **dadurch gekennzeichnet, dass** ein Abtriebs-Rotationskörper (15) einen kreisförmigen Querschnitt aufweist.

4. Getriebe nach einem der vorhergehenden Ansprüche, **dadurch gekennzeichnet, dass** die Getriebewelle (3) im Bereich des Zusammenwirkens mit den Abtriebs-Rotationskörpern (15) einen kreisförmigen Querschnitt aufweist.

5. Getriebe nach einem der vorhergehenden Ansprüche, **dadurch gekennzeichnet, dass** das Getriebe (1) ein Untersetzungsgetriebe ist und dass die zur Lagerung der Getriebewelle (3) dienenden Abtriebs-Rotationskörper (15) mit einer deutlich niedrigeren Frequenz als der Drehfrequenz der Getriebewelle (3) umlaufen.

6. Getriebe nach einem der vorhergehenden Ansprüche, **dadurch gekennzeichnet, dass** die Getriebewelle (3) ausgehend von einem Motor (5) bis in den Zusammenwirkungsbereich durchgehend denselben kreisförmigen Querschnitt aufweist.

7. Getriebe nach einem der vorhergehenden Ansprüche, **dadurch gekennzeichnet, dass** die Laufbahn (20) des oberen Laufbahnkörpers (13) zur Getriebewelle (3) hin geneigt verläuft, wobei sie im Querschnitt mit der Längsachse (x) der Abtriebswelle (3) zum freien Ende (23) der Getriebewelle (3) hin betrachtet einen spitzen Winkel (Beta) einschließt.

8. Getriebe nach einem der vorhergehenden Ansprüche, **dadurch gekennzeichnet, dass** die höhenmäßige Strukturierung bezüglich eines zur Getriebewelle (3) konzentrischen Kreises gegeben ist.

9. Getriebe nach einem der vorhergehenden Ansprüche, **dadurch gekennzeichnet, dass** die Abtriebs-Rotationskörper (15) scheibenförmig gestaltet sind.

10. Getriebe nach einem der vorhergehenden Ansprüche, **dadurch gekennzeichnet, dass** die Abtriebs-Rotationskörper (15) in einem Käfig (14) bezüglich der Getriebewelle (3) sich diametral gegenüberliegend gehalten sind.

11. Getriebe nach der vorhergehenden Ansprüche, **dadurch gekennzeichnet, dass** die Abtriebs-Rotationskörper (15) motorseitig mit einem unteren Laufbahnkörper (12) zusammenwirken.

12. Getriebe nach Anspruch 11, **dadurch gekennzeichnet, dass** die Laufbahn (19) des unteren Laufbahnkörpers (12) zur Getriebewelle (3) hin geneigt verläuft, wobei im Querschnitt mit der Längsachse (x) der Abtriebswelle (3) zum motorseitigen Ende der Getriebewelle (3) hin betrachtet einen spitzen Winkel (Alpha) einschließt.

13. Getriebe nach einem der Ansprüche 11 oder 12, **dadurch gekennzeichnet, dass** die Laufbahn (19) des unteren Laufbahnkörpers (12) über ihren Umfang höhenmäßig strukturiert ist.

14. Getriebe nach einem der Ansprüche 11 bis 13, **dadurch gekennzeichnet, dass** jedenfalls bei höhenmäßiger Strukturierug des unteren (12) und oberen Laufbahnkörpers (13) diese in Umfangsrichtung umfangsmäßig zueinander einstellbar sind.

15. Getriebe nach einem der vorhergehenden Ansprüche, **dadurch gekennzeichnet, dass** ein Abtriebs-Rotationskörper (15) eine Wellen-Eingriffsfläche (25) aufweist, die sich parallel zur Achse (x) der Getriebewelle (3) erstreckt.

16. Getriebe nach einem der vorhergehenden Ansprüche, **dadurch gekennzeichnet, dass** ein Abtriebs-Rotationskörper (15) eine Laufbahn-Eingriffsfläche (26) aufweist, die sich in einem gleichen Winkel zur Getriebewelle (3) wie die Laufbahn (19, 20) des zugeordneten Laufbahnkörpers (12, 13) zur Getriebewelle (3) erstreckt.

17. Getriebe nach einem der vorhergehenden Ansprüche, **dadurch gekennzeichnet, dass** ein Abtriebs-Rotationskörper (15) mittels einer Randkante als Laufbahn-Eingriffsfläche (26) mit der Laufbahn (19, 21) des zugeordneten Laufbahnkörpers (12, 13) zusammenwirkt.

18. Getriebe nach einem der vorhergehenden Ansprüche, **dadurch gekennzeichnet, dass** die Getriebswelle (3) eine Umfangsverzahnung aufweist, die mit einer Umfangsverzahnung der Abtriebs-Rotationskörper (15) kämmt.

19. Getriebe nach einem der vorhergehenden Ansprüche, **dadurch gekennzeichnet, dass** die Abtriebs-Rotationskörper (15) mit einer Innenverzahnung (32) eines die Abtriebs-Rotationskörper (15) und die Abtriebswelle (3) aufnehmenden Ringkörpers (31) kämmen.

20. Getriebe nach einem der vorhergehenden Ansprüche, **dadurch gekennzeichnet, dass** drei oder mehr Abtriebs-Rotationskörper (15) vorgesehen sind.

21. Getriebe nach einem der vorhergehenden Ansprüche, **dadurch gekennzeichnet, dass** zwei oder mehr Einheiten von Abtriebs-Rotationskörpern (15) und einem oberen Laufbahnkörper (13) axial hintereinander vorgesehen sind.

## Claims

1. Gear mechanism (1) having a gear-mechanism shaft (3), preferably an output shaft (3) of an electric motor (5), and output rotary bodies (15) which are in engagement with the gear-mechanism shaft (3), the output rotary bodies (15) interacting with the gear-mechanism shaft in the radial direction, by bearing against the gear-mechanism shaft, and interacting in the axial direction of the gear-mechanism shaft with an upper guideway body which can move in the axial direction and is loaded toward the output rotary bodies (15), an interaction region of the gear-mechanism shaft having a circular cross section, **characterised in that** a guideway (20) of the guideway body (13) is structured in terms of its height over its periphery substantially in relation to a circumferential circular orbit of the output rotary bodies, so that a to and fro movement of the guideway body in the direction of the gear-mechanism shaft results.

2. Gear mechanism according to Claim 1, **characterized in that** the axes of rotation of the output rotary bodies (15) revolve on a circular orbit.

3. Gear mechanism or motor according to one or more of the preceding claims, **characterized in that** an output rotary body (15) is circular in cross section.

4. Gear mechanism or motor according to one or more of the preceding claims, **characterized in that** the gear-mechanism shaft (3) is circular in cross section in the region of interaction with the output rotary bodies (15).

5. Gear mechanism or motor according to one or more of the preceding claims, **characterized in that** the gear mechanism (1) is a speed reduction gear mechanism, and **in that** the output rotary bodies (15) which are used to bearingly support the gear-mechanism shaft (3) revolve at a significantly lower frequency than the rotational frequency of the gear-mechanism shaft (3).

6. Gear mechanism or motor according to one or more of the preceding claims, **characterized in that** the gear-mechanism shaft (3) has the same circular cross section continuously from the electric motor (5) to the interaction region.

7. Gear mechanism or motor according to one or more of the preceding claims, **characterized in that** the guideway (20) of the upper guideway body (13) runs such that it is inclined toward the gear-mechanism shaft (3), this guideway, in cross section, including an acute angle (beta) with the longitudinal axis (x) of the output shaft (3) as seen toward the free end (23) of the gear-mechanism shaft (3).

8. Gear mechanism or motor according to one or more of the preceding claims, **characterized in that** the structuring over the height is produced relative to a circle which is concentric with respect to the gear-mechanism shaft (3).

9. Gear mechanism or motor according to one or more of the preceding claims, **characterized in that** the output rotary bodies (15) are configured in disk form.

10. Gear mechanism or motor according to one or more of the preceding claims, **characterized in that** the output rotary bodies (15) are held in a cage (14), diametrically opposite one another with respect to the gear-mechanism shaft (3).

11. Gear mechanism or motor according to one or more of the preceding claims, **characterized in that** the output rotary bodies (15) interact with a lower guideway body (12) on the motor side.

12. Gear mechanism or motor according to one or more of the preceding claims, **characterized in that** the guideway (19) of the lower guideway body (12) runs such that it is inclined toward the gear-mechanism shaft (3), including, in cross section, an acute angle (alpha) with the longitudinal axis (x) of the output shaft (3), as seen toward the motor-side end of the gear-mechanism shaft (3).

13. Gear mechanism or motor according to Claim 11 or 12, **characterized in that** the guideway (19) of the lower guideway body (12) is structured in terms of its height over its periphery.

14. Gear mechanism or motor according to one of Claims 11 to 13, **characterized in that** at least with structuring of the lower guideway body (12) and upper guideway body (13) in terms of their height, these two components can be adjusted in terms of their periphery with respect to one another in the peripheral direction.

15. Gear mechanism or motor according to one or more of the preceding claims, **characterized in that** an output rotary body (15) has a shaft engagement surface (25) which extends parallel to the axis (x) of the gear-mechanism shaft (3).

16. Gear mechanism or motor according to one or more of the preceding claims, **characterized in that** an output rotary body (15) has a guideway engagement surface (26) which extends at the same angle with respect to the gear-mechanism shaft (3) as the guideway (19, 20) of the associated guideway body (12, 13) with respect to the gear-mechanism shaft (3).

17. Gear mechanism or motor according to one or more of the preceding claims, **characterized in that** an output rotary body (15) interacts, by means of a peripheral edge as guideway engagement surface (26), with the guideway (19, 21) of the associated guideway body (12, 13).

18. Gear mechanism or motor according to one or more of the preceding claims, **characterized in that** the gear mechanism shaft (3) has peripheral toothing which meshes with peripheral toothing on the output rotary bodies (15).

19. Gear mechanism or motor according to one or more of the preceding claims, **characterized in that** the output rotary bodies (15) mesh with internal toothing (32) of a ring body (31) which accommodates the output rotary bodies (15) and the output shaft (3).

20. Gear mechanism or motor according to one or more of the preceding claims, **characterized in that** three or more output rotary bodies (15) are provided.

21. Gear mechanism or motor according to one or more of the preceding claims, **characterized in that** two or more assemblies of output rotary bodies (15) and an upper guideway body (13) are provided in succession in the axial direction.

## Revendications

1. Transmission (1) avec un arbre de transmission (3), de préférence, un arbre mené (3) d'un moteur électrique (5), et avec des corps de rotation menés (15) engagé en contact avec l'arbre de transmission (3) et coopérant en direction radiale avec l'arbre de transmission, par appui sur l'arbre de transmission, et coopérant en direction axiale de l'arbre de transmission avec un corps supérieur de piste de roulement, mobile en direction axiale et chargé sur les corps de rotation menés (15), dans laquelle transmission une zone de coopération de l'arbre de transmission présente une section transversale de forme circulaire, **caractérisée en ce qu'**une piste de roulement (20) du corps de piste de roulement (13) est structurée en hauteur chaque fois par rapport à une piste circulaire de circulation des corps de rotation menés (15) sur sa périphérie, de manière à produire un déplacement alterné, dans la direction de l'arbre de transmission, du corps de piste de roulement (13).

2. Transmission selon la revendication 1, **caractérisée en ce que** les axes de rotation des corps de rotation menés (15) circulent sur une piste circulaire.

3. Transmission selon l'une des revendications précédentes, **caractérisée en ce qu'**un corps de rotation mené (15) présente une section transversale circulaire.

4. Transmission selon l'une des revendications précédentes, **caractérisée en ce que** l'arbre de transmission (3) présente, dans la zone de la coopération avec les corps de rotation menés (15), une section transversale circulaire.

5. Transmission selon l'une des revendications précédentes, **caractérisée en ce que** la transmission (1) est une transmission de réduction de vitesse, et **en ce que** les corps de rotation menés (15), servant au montage de palier de l'arbre de transmission (3), circulent à une fréquence nettement inférieure à la fréquence de rotation de l'arbre de transmission (3).

6. Transmission selon l'une des revendications précédentes, **caractérisée en ce que** l'arbre de transmission (3) présente, en partant d'un moteur (5) jusqu'à la zone de coopération, de façon continue, la même section transversale de forme circulaire.

7. Transmission selon l'une des revendications précédentes, **caractérisée en ce que** la piste de roulement (20) du corps de piste de roulement (13) est inclinée par rapport à l'arbre de transmission (3), en formant, en coupe transversale avec l'axe longitudinal (x) de l'arbre mené (3) par rapport à l'extrémité libre (23) de l'arbre de transmission (3), un angle aigu (Bêta).

8. Transmission selon l'une des revendications précédentes, **caractérisée en ce que** la structuration en hauteur est produite par rapport à un cercle concentrique par rapport à l'arbre de transmission (3).

9. Transmission selon l'une des revendications précédentes, **caractérisée en ce que** les corps de rotation menés (15) sont conformés en forme de disque.

10. Transmission selon l'une des revendications précédentes, **caractérisée en ce que** les corps de rotation menés (15) sont maintenus de façon diamétralement opposée par rapport à l'arbre de transmission (3), dans une cage (14).

11. Transmission selon l'une des revendications précédentes, **caractérisée en ce que** les corps de rotation menés (15) coopèrent, du côté moteur avec un corps inférieur (12) de piste de roulement (12).

12. Transmission selon la revendication 11, **caractérisée en ce que** la piste de roulement (19) du corps inférieur (12) de piste de roulement est inclinée par rapport à l'arbre de transmission (3), sachant que, en formant en coupe transversale avec l'axe longitudinal (x) de l'arbre mené (3), par rapport à l'extrémité du côté moteur de l'arbre de transmission (3), un angle aigu (Alpha).

13. Transmission selon l'une des revendications 11 ou 12, **caractérisée en ce que** la piste de roulement (19) du corps inférieur (12) de piste de roulement est structurée en hauteur sur sa périphérie.

14. Transmission selon l'une des revendications 11 à 13, **caractérisée en ce que**, en tout cas, pour une structuration en hauteur du corps de piste de roulement inférieur (12) et supérieur (13), ceux-ci sont réglables mutuellement en périphérie dans la direction périphérique.

15. Transmission selon l'une des revendications précédentes, **caractérisée en ce qu'**un corps de rotation mené (15) présente une surface (25) de contact avec un arbre s'étendant parallèlement à l'axe (x) de l'arbre de transmission (3).

16. Transmission selon l'une des revendications précédentes, **caractérisée en ce qu'**un corps de rotation mené (15) présente une surface de contact (26), avec la piste de roulement, s'étendant, par rapport à l'arbre de transmission (3), sous un angle identique à celui selon lequel la piste de roulement (19, 20) du corps de piste de roulement (12, 13) associé s'étend par rapport à l'arbre de transmission (3).

17. Transmission selon l'une des revendications précédentes, **caractérisée en ce qu'**un corps de rotation mené (15) coopère, au moyen d'une arête de bordure faisant office de surface de contact avec la piste de roulement (26), avec la piste de roulement (19, 21) du corps de piste de roulement (12, 13) associé.

18. Transmission selon l'une des revendications précédentes, **caractérisée en ce que** l'arbre de transmission (3) présente une denture périphérique s'engrenant avec une denture périphérique des corps de rotation menés (15).

19. Transmission selon l'une des revendications précédentes, **caractérisée en ce que** les corps de rotation menés (15) s'engrènent avec une denture intérieure (32) d'un corps annulaire (31) recevant les corps de rotation menés (15) et l'arbre mené (3).

20. Transmission selon l'une des revendications précédentes, **caractérisée en ce que** trois corps de rotation menés (15) ou plus sont prévus.

21. Transmission selon l'une des revendications précédentes, **caractérisée en ce que** deux unités ou plus, formées de corps de rotation menés (15) et d'un corps supérieur (13) de piste de roulement, sont prévues, axialement les unes derrière les autres.
